(19) Europäisches Patentamt
European Patent Office
Office européen des brevets

(11) EP 2 239 537 A1

(12) EUROPEAN PATENT APPLICATION
published in accordance with Art. 153(4) EPC

(43) Date of publication:
13.10.2010 Bulletin 2010/41

(21) Application number: 09706878.7

(22) Date of filing: 28.01.2009

(51) Int Cl.:
*G01B 7/16* (2006.01) *G01D 21/00* (2006.01)
*G01L 5/00* (2006.01)

(86) International application number:
PCT/JP2009/051338

(87) International publication number:
WO 2009/096419 (06.08.2009 Gazette 2009/32)

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(30) Priority: 28.01.2008 JP 2008016690
22.04.2008 JP 2008111491

(71) Applicant: Kuraray Co., Ltd.
Kurashiki-shi
Okayama 710-0801 (JP)

(72) Inventors:
- KOMIYA, Ryota
Tsukuba-shi
Ibaraki 305-0841 (JP)
- KATO, Toshinori
Tsukuba-shi
Ibaraki 305-0841 (JP)
- OKUNO, Taketoshi
Tsukuba-shi
Ibaraki 305-0841 (JP)
- SUGOH, Nozomu
Tsukuba-shi
Ibaraki 305-0841 (JP)

(74) Representative: von Kreisler Selting Werner
Patentanwälte
Deichmannhaus am Dom
Bahnhofsvorplatz 1
50667 Köln (DE)

# (54) FLEXIBLE DEFORMATION SENSOR

(57) Disclosed is a low-cost deformation sensor which is light-weighted and flexible. The deformation sensor stably operates with high responsivity in the air. Specifically disclosed is a deformation sensor (6) which is a sheet composed of a nonaqueous polymer solid electrolyte (10) and at least a pair of electrodes (7, 8) sandwiching the nonaqueous polymer solid electrolyte (10). The nonaqueous polymer solid electrolyte (10) contains a polymer component which is selected from at least either of a polymer containing a monomer unit having a heteroatom and a block copolymer containing a block of the polymer, and an ionic liquid. The sensor generates an electromotive force when deformed, and is able to sense the position of deformation and the pressure distribution.

Fig. 1

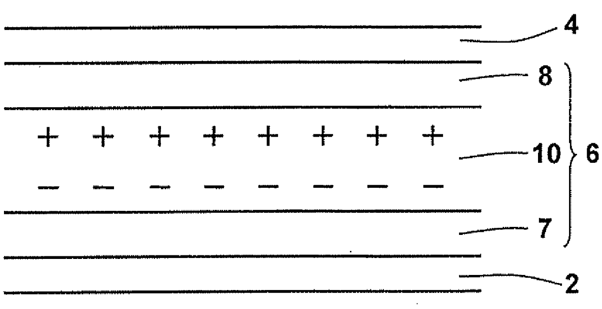




Printed by Jouve, 75001 PARIS (FR)

## Description

### Technical Field

The present invention relates to a deformation sensor generating electromotive force when a flexible element is deformed or a deformation sensor being capable of detecting a position of deformation and a pressure distribution.

### Background of the Invention

In recent years, in the technological field of healthcare equipments, industrial robots and personal robots, needs for small-sized and light-weighted sensors are growing. Especially, needs for light-weighted and flexible sensors that can be installed, as a strain or vibration sensor, on a structure having a complicated shape are increasing.

As sensors that convert mechanical energy into electrical energy, piezoelectric devices using piezoelectric ceramic etc. have been widely used. The piezoelectric ceramics represented by barium titanate or lead zirconate titanate (PZT) convert mechanical energy into electrical energy by piezoelectric effect in which the ceramics generate electric charge when they are stressed.

However, because these sensors made of the piezoelectric ceramics comprise a high density inorganic material, these sensors are often inadequate for an application where the sensors are desired to be light in weight. In addition, because such sensors have less shock resistance, their piezoelectric ceramics are liable to be destroyed and their sensing function is likely to be deteriorated when the sensors are subjected to external impact. Further, as their flexibility is inferior, it is difficult to set these sensors up on a structural element having a complicated shape of curvatures or unleveled surfaces, and it has been difficult to detect a large deformation or small stress.

Until now, there has been no sensor capable of sensing information on displacement or a position in a three-dimensional space or pressure distribution on a two-dimensional surface.

As a sensor which can detect a pressure distribution on a two-dimensional surface, a sensor having a polymer piezoelectric substance such as vinylidene fluoride (Japanese Patent Publication No. H10-38736Al) or a sensor having an anisotropic conductive substance represented by a pressure sensitive rubber to detect a change in resistance (Japanese Patent Publication No. 2007-10482A1) have been known. However, these sensors can detect a pressure distribution but cannot detect displacement or a position in height direction.

Actuators are known to perform a function reverse to that of sensors. Among the actuators, polymer actuators are attracting attention. For example, polymer actuators using hydrated polymer gel are disclosed in Japanese Patent Publication No. 63-309252A1. The actuators utilize a change in shape caused by stimulation such as a change in temperature, pH, electric field, etc. The polymer actuators can convert mechanical energy such as a pressure, displacement etc. into electrical energy so that the actuators can be reversely used as sensors (Japanese Patent Publication No. 2006-173219A1).

However, morphological changes of the hydrated polymer gel, which arises from various stimulations, are generally very slow. And the hydrated polymer gel has a low mechanical strength due to its inhomogeneous crosslinking structure. Therefore, further improvements are required for actual use thereof as a deformation sensor.

To overcome such problems mentioned-above, a polymer actuator has been disclosed in Japanese Patent Publication No. 2004-289994A1, which comprises an ion exchange resin membrane and electrodes attached to both surfaces of the membrane. In this actuator, a potential difference is applied on the hydrated ion exchange resin membrane to let the membrane curve and deform. However, the above mentioned polymer actuator has such a problem that it only works under the presence of water. Therefore, it only operates under wet environment conditions, and also response sensitivity thereof is insufficient.

Considering such operating environments mentioned above, another polymer actuator is disclosed in Japanese Patent Publication No. 2005-51949A1, which comprises a solid electrolyte made by blending an ionic liquid, a monomer and a crosslinking agent, curing the mixture, and then attaching a gold foil to the resulting solid electrolyte as electrodes. However, the ionic liquid is immobilized by the crosslinking so that the degree of freedom of the shape is small.

Also, a sensor comprising a polymer solid electrolyte which comprises an ionic liquid and an ion-exchange resin membrane is disclosed in Proc. of SPIE Vol. 6529 L-1. However, in this sensor, polarization occurs in the ion-exchange resin membrane so that the dielectric constant of the membrane becomes higher. And accordingly the electric capacitance of the membrane becomes large and the response sensitivity of the sensor is undesirably lowered.

### Summary of the Invention

An object of the present invention is to overcome the above mentioned problems and to provide a deformation sensor comprising a sensing element which generates an electromotive force when deformed, more specifically a light-weighted and flexible deformation sensor having high and stable response sensitivity in the air.

The present invention developed to accomplish this object is a deformation sensor comprising a flexible element that generates electromotive force when deformed comprises:

at least a pair of electrodes; and
a nonaqueous polymer solid electrolyte comprising;
an ionic liquid; and
a polymer component containing no ionic dissociative group, which is selected from at least either of a polymer containing a monomer unit having a hetero atom and a block copolymer containing a block of the polymer. The surface electric resistance of at least a part of an electrode surface which does not abut on the nonaqueous polymer solid electrolyte is not more than 10Ω/square, and the electric capacitance of the flexible element is in the range of 0.1 to 500mF per 1 $cm^2$.

The deformation sensor of the present invention is **characterized in that** the ionic conductance of the nonaqueous polymer solid electrolyte is in the range of not less than $1x10^{-7}$S/cm and not more than $1x10^{-1}$S/cm.
The deformation sensor of the present invention is **characterized in that** the electrode contains carbon fine particles as a constituent thereof.
The deformation sensor of the present invention is **characterized in that** the polymer component contains a copolymer, as a component, which contains a polymer block miscible with the ionic liquid and another polymer block immiscible with the ionic liquid, the copolymer being in a condition impregnated with the ionic liquid.
The deformation sensor of the present invention is **characterized in that** on one surface of the electrode, on which a nonaqueous polymer solid electrolyte does not abut, a power collecting layer that is connected to an external circuit is attached.
The deformation sensor of the present invention is **characterized in that** the power collecting layer has a pattern shape.
The deformation sensor of the present invention is **characterized in that** on one surface of each electrode of the pair of electrodes, on which the nonaqueous polymer solid electrolyte does not abut, a power collecting layers that is connected to an external circuit and has a same pattern is attached.
The deformation sensor of the present invention is **characterized in that** the power collecting layers having the same pattern are located at positions so as to be arranged to overlap each other via both the nonaqueous polymer solid electrolyte and the pair of electrodes that sandwich the nonaqueous polymer solid electrolyte. The same patterns are a polygonal, round or/and oval shape and are aligned side by side at regular intervals.
The present invention which is made to achieve the above mentioned object is a deformation sensor capable of detecting a position of deformation and a pressure distribution by generating an electromotive force through deformation of a flexible element, the flexible element comprising:

a nonaqueous polymer solid electrolyte that comprises an ionic liquid and a polymer component selected at least either of a polymer containing a monomer unit having a hetero atom and a block copolymer containing a block of the polymer, and
at least a pair of electrodes sandwiching the nonaqueous polymer solid electrolyte.

The deformation sensor capable of detecting position of deformation and pressure distribution of the present invention is **characterized in that** the electrode has a pattern shape.
The deformation sensor capable of detecting position of deformation and pressure distribution of the present invention is **characterized in that** each electrode of the pair of electrodes has a plurality of electro conductive patterns independently connecting to an external circuit without electrically conducting with each other, and an opposing point of a pair of electric conductive patterns sandwiching the nonaqueous polymer solid electrolyte is a detecting position.
The deformation sensor capable of detecting position of deformation and pressure distribution of the present invention is **characterized in that** both electrodes of the pair of electrodes have a same pattern.
The deformation sensor of the present invention is **characterized in that** the patterns are located at a position so as to be arranged to overlap each other via the nonaqueous polymer solid electrolyte, the same pattern having a polygonal, round or/and oval shape and aligning side by side at regular intervals.
The present deformation sensor capable of detecting position of deformation and pressure distribution is **characterized in that** on one surface of each electrode of the pair of electrodes, on which the nonaqueous polymer solid electrolyte does not abut, a power collecting layer having a plurality of patterns independently connecting to an external circuit without electrically conducting with each other is provided, and an opposing point of a pair of a patterns of the power collecting layer is a detecting position.
The deformation sensor of the present invention has structure in which the nonaqueous polymer solid electrolyte is sandwiched by a pair of electrodes. When mechanical deformation is given to this structure, ion transfer and bias in

electric charge occur, and then electric voltage is generated. The sensor generates a high voltage and has high response sensitivity.

The present deformation sensor responds sensitively to a mechanical deformation in the dry state such as in the atmosphere and is light in weight and flexible, Practically, the sensor can be used for various applications, such as for speed sensors, acceleration sensors, pressure sensors, angle sensors, flow velocity sensors, strain sensors, displacement sensors, position sensors, bend sensors, curvature sensors, antenna sensors, vibration detectors for construction, tactile displays which transforms information detected by a sensor into visual images, and so on.

Brief Description of the Drawing

Fig. 1 is a cross sectional view showing the deformation sensor with the power collecting layer of the present invention.

Fig. 2 is a perspective view showing that the electrode pattern of the present deformation sensor has a stripe electrode.

Fig. 3 is a plan view showing another example of the present deformation sensor having another electrode pattern.

Fig. 4 is a plan view showing another example of the present deformation sensor having another electrode pattern.

Fig. 5 is a plan view showing another example of the present deformation sensor having another electrode pattern.

Fig. 6 is a plan view showing another example of the present deformation sensor having another electrode pattern.

Fig. 7 is a plan view showing still another example of the present deformation sensor having another electrode pattern.

Fig. 8 is a plan view showing still another example of the present deformation sensor having another electrode pattern.

Fig. 9 is a block diagram showing a measurement system for evaluating an electromotive force of the deformation sensor of the present invention.

Description of Codes

Codes means as follows. 2 and 4: power collecting layer, 6: sample of a deformation sensor, 8 and 7: electrode, 9: data logger, 10: nonaquous polymer solid electrode, $12_1$, $12_2$, $12_3$ ...: stripe electrode, $13_1$, $13_2$, $13_3$ ... : stripe electrodes, $15_1$, $15_2$, $15_3$ ...: electrode pattern, $15A_1$, $15A_2$, $15A_3$ ...: lead body, 20A, 20B: insulator film, 21: test specimen, 22 and 24: lead wire, 26 and 28: fixing jig.

Hereunder, preferred embodiments of the present invention are explained in detail.

The deformation sensor of the present invention has a flexible element structure in which a nonaqueous polymer solid electrolyte is sandwiched with at least a pair of electrodes. As regards to criteria for performance of the deformation sensor, the sensor is required to have a structure that can generate a high voltage when deformed mechanically. Even when mechanical deformation is given in dry conditions like in the atmosphere, ions are required to move stably. To achieve these requirements, the nonaqueous polymer solid electrolyte comprises an ionic liquid and a polymer component containing no ionic dissociative group, which is selected from a group consisting of a polymer containing a monomer unit having a hetero atom and a block copolymer containing a block of the polymer. In this invention, the nonaqueous polymer solid electrolyte means a polymer solid electrolyte having a water content of less than 20% by mass.

In the present invention, the polymer containing monomer unit having hetero atom and the block copolymer containing block of the polymer mean a polymer having a repeating unit containing the hetero atom of not less than 20% by mass of the total repeating unit in the main chain. Accordingly, such polymers that are modified to contain a repeating unit having a hetero atom of less than 20% by mass in the total repeating unit, for example, modified polyolefines which are modified to have a hetero atom at the terminal of the molecule by oxidation, etc. are not included. There is no limitation on the kind of the hetero atom, and oxygen, fluorine, chlorine, bromine, sulfur, nitrogen, etc. can be used. As the component of the nonaqueous polymer solid electrolyte, for example, Nafion or Flemion can be used.

The polymer that contains no ionic dissociative group means a polymer that does not contain the ion dissociative group in the repeating unit while a polymer that contains a unit having the ionic dissociative group of less than 20% by mass in the repeating unit of the main chain is not included. Here, the ionic dissociative group means a group having a proton-dissociation constant higher than that of carboxylic acid. Specifically, a sulfonyl group, a carboxyl group, etc. can be exemplified as the ionic dissociative group.

As the polymer component containing at least the hetero atom that composes the nonaqueous polymer solid electrolyte, a copolymer (P) containing a polymer block (Pa) that is miscible with the ionic liquid that composes the polymer solid electrolyte and a polymer block (Pb) that is immiscible with the ionic liquid; and a polymer (Q) that is miscible with the ionic liquid; are exemplified as a preferable one. In the above mentioned description, the copolymer (P) may contain one or more polymer block (Pa) and polymer block (Pb) respectively.

As examples of the polymer block (Pa) that is miscible with the ionic liquid and composes the copolymer (P), vinyl acetate series polymer block such as polyvinyl acetate, polyvinyl alcohol, polyvinyl butyral, etc.; vinyl halide series polymer block such as polyvinylidene-fluoride, polyhexafluoropropylene, etc.; (meth)acrylic acid alkyl ester polymer block such as polymethyl(meth)acrylate, polybutyl(meth)acrylate, etc.; (meth)acrylic acid hydroxyl alkyl (carbon number of 2 to 6)ester polymer block such as poly(2-hydroxyethyl)(meth)acrylate, etc., (meth)acrylic acid alkoxyalkylester polymer block; (meth)acrylic acid hydroxyoligoalkylene glycolester polymer block; (meth)acrylic acid alkoxyoligoalkylene glycolester polymer block; vinylether series polymer block such as polymethyl vinylether, polyethyl Vinylether, etc.; vinylketone series polymer block such as polymethyl vinyl ketone, polymethyl isopropenyl ketone, etc.; polyether block such as polyethyleneoxide, etc.; acrolein series polymer block such as poly(meth)acrolein, etc.; acrylamid series polymer block such as poly(meth)acrylamid, etc.; polyester block such as polyethylene terephthalate, etc.; polyamid block such as polyamid-6, polyamid-6, 6, polyamid-6, 12, etc.; siloxane series polymer block such as polydimethyl siloxane, etc.; nitrile series polymer block such as polyacrylonitrile, etc. can be exemplified. Though names are not specifically listed there, a polymer block of a copolymer comprising the constituents of the above mentioned polymer block can also be used.

As examples of the polymer block (Pb) which is immiscible with the ionic liquid that is used as the component of the copolymer (P), olefin series polymer block or alkene (carbon number of 2 to 8) polymer block such as polyethylene, polypropylene, polybutene, polyoctene, polyisobutylene, etc.; styrene series polymer blocks such as polystyrene block and another styrene series polymer blocks whose benzene ring or a-position is substituted with one or two alkyl groups in total having a carbon number of one to four illustrated by poly(4-methylstyrene), etc.; can be exemplified.

Though concrete examples are not specifically listed here, a polymer block obtained through copolymerization of a constituent unit of the above mentioned polymer block and another monomer unit can be used. For example, a copolymer block such as a styrene-butadiene polymer block prepared from a styrene-type monomer of styrene substituted with none or styrene substituted with one or two alkyl groups in total having a carbon number of one to four at a benzene ring or a-position thereof and a conjugated diene having a carbon number of four to eight can also be used.

In the copolymer (P), there is no specific limitation on the binding mode of the polymer block (Pa) and the polymer block (Pb). A block copolymer or graft copolymer can be used as long as one or more of the polymer block (Pa) and (Pb) are contained in the copolymer. Block copolymerization is preferable from the view point of ease of manufacture. The block copolymer having two or more polymer blocks (Pb) is preferable from the viewpoint of mechanical strength of the nonaqueous polymer solid electrolyte.

There is no specific limitation on the molecular weight, but the number average molecular weight of the polymer (P) is preferably in the range of 1,000 to 2,000,000, more preferably 5,000 to 1,000,000, still more preferably 10,000 to 500,000. When the number average molecular weight is less than 1,000, the mechanical strength of the copolymer (P) or the nonaqueous polymer solid electrolyte becomes poor. On the contrary, when the number average molecular weight exceeds 2,000,000, the viscosity of the copolymer (P) or the nonaqueous polymer solid electrolyte becomes too high, being inconvenient in handling the polymer.

There is no specific limitation on the mass fraction of the polymer block (Pa) in the copolymer (P). However, from the viewpoint of the mechanical strength of the nonaqueous polymer solid electrolyte, the mass fraction of the polymer block (Pa) is preferably in the range of not more than 80% by mass, more preferably not more than 75% by mass, still more preferably not more than 70% by mass. On the contrary, from the viewpoint of the ionic conductivity of the resulting nonaqueouos polymer solid electrolyte, the mass fraction of the polymer block (Pa) is preferably in the range of not less than 15% by mass, more preferably not less than 20% by mass, still more preferably not less than 25% by mass.

There is no specific limitation on the manufacturing method of the copolymer (P). Living polymerization, polymerization of a monomer at a terminal or a side chain of a polymer prepared as a precursor, and a chemical reaction between the reactive functional groups located at the end of each polymer, can be exemplified. These methods can be arbitrarily selected depending on the molecular structure of the copolymer (P).

As an example of polymer (Q) which is miscible with the ionic liquid, vinylidene fluoride-hexafluoropropylene copolymer; vinylic halide series polymers such as polyvinylidene fluoride, etc.; (meth)acrylate series polymers such as poly(2-hydroxyethyl) (meth)acrylate, polymethyl (meth)acrylate, etc.; ether series polymers such as polyethylene oxide, etc.; acrylonitrile series polymers such as polyacrylonitrile, etc. can be exemplified. Of them, from the viewpoint of the ionic conductivity of the resulting nonaqueous polymer solid electrolyte, vinylidene fluoride-hexafluoropropylene; halogenated vinyl series polymers such as polyvinylidene fluoride, etc.; (meth)acrylate series polymers such as poly(2-hydroxyethyl) (meth)acrylate, polymethyl (meth)acrylate, etc. are preferable.

There is no specific limitation on the molecular weight of the polymer (Q), but the number average molecular

weight is preferably in the range of 1,000 to 2,000,000, more preferably 5,000 to 1,000,000, still more preferably 10,000 to 500,000. When the number average molecular weight is less than 1,000, the mechanical strength of the polymer (Q) or the nonaqueous polymer solid electrolyte becomes poor. On the contrary, when the number average molecular weight exceeds 2,000,000, the viscosity of the polymer (Q) or the nonaqueous polymer solid electrolyte becomes too high, being inconvenient in handling the polymer.

There is no specific limitation on the mass fraction of hexafluoropropylene unit in the above mentioned polyvinylidene fluoride-hexafluoropropylene copolymer exemplified as the polymer (Q), but from the viewpoint of the mechanical strength of the resulting nonaqueous polymer solid electrolyte, the mass fraction of hexafluoropropylene unit is preferably in the range of not more than 98% by mass, more preferably not more than 95% by mass, still more preferably not more than 90% by mass. On the other hand, from the viewpoint of flexibility of the resulting nonaqueous polymer solid electrolyte, the mass fraction of hexafluoropropylene unit is preferably in the range of not less than 2% by mass, more preferably not less than 5% by mass, still more preferably not less than 10% by mass.

As mentioned above, as the polymer component composing the nonaqeous polymer solid electrolyte of the present invention, the copolymer (P) and the copolymer (Q) can be both utilized. However, from the viewpoint of the ionic conductivity of the nonaqeous polymer solid electrolyte, copolymer (P), polyvinylidene fluoride-hexafluoroplopylene copolymer, polyvinylidene fluoride, poly(2-hydroxyethyl) (meth)acrylate and polymethyl (meth)acrylate are more preferable. And from the viewpoint of the mechanical strength of the resulting nonaqeous polymer solid electrolyte, the copolymer (P) containing more than one polymer block (Pa) which is miscible with the ionic liquid and containing not less than two polymer blocks (Pb) which are immiscible with the ionic liquid, is still more preferable.

The nonaqeous polymer solid electrolyte comprises an ionic liquid and a polymer component. In other words, the ionic liquid is impregnated into a framework of the polymer component. There is no specific limitation on the mass fraction of the ionic liquid to the polymer component, but from the viewpoint of the ionic conductivity and the mechanical strength of the nonaqeous polymer solid electrolyte, the ratio is preferably in the range of from about 0.1: 1 to 10:1. When the polymer component is a copolymer (P), the mass fraction of the ionic liquid to the polymer block (Pa) is preferably in the range of from about 0.03:1 to 40:1. There is no specific limitation on the shape of the nonaqeous polymer solid electrolyte so that, for example, the electrolyte can be made into a membrane-shape, film-shape, sheet-shape, plate-shape, textile-shape, rod-shape, cube-shape, cuboid-like shape, etc.

There is no specific limitation on the manufacturing method of the nonaqeous polymer solid electrolyte, so that various methods described below can be adopted such as: the ionic liquid and the polymer component are heated and mechanically kneaded and then molded; the ionic liquid and the polymer component are dissolved into an appropriate solvent and then the solvent is evaporated and then molded; the ionic liquid and the polymer component are dissolved into an appropriate solvent and then the solution is poured into a mold to remove the solvent; the ionic liquid is impregnated into the polymer component and then molded; the ionic liquid is impregnated into the molded polymer component; the monomers to be used to produce the polymer component are polymerized in the ionic liquid under the presence of a polymerization initiator and then the resulting material is molded; etc.

The above mentioned procedures can be arbitrarily selected. As the solvent used in a process in which the ionic liquid and the polymer component are dissolved and then the solvent is removed from the resulting solution, for example, tetrahydrofuran, methyl ethyl ketone, N-methyl-2-pyrrolidone etc. can be exemplified.

The electrodes of the deformation sensor of the present invention are placed so as to sandwich the nonaqueous polymer solid electrolyte and attach them firmly to the electrolyte, to thereby avoid the electrical contact between the electrodes. The electrodes may independently be integrated into one body or may be made into a plurality of individually independent electrodes without integration.

There is no specific limitation on the ratio of the thickness of the electrode to that of the nonaqueous polymer solid electrolyte in the thickness direction, but from the viewpoint of effectively exerting the characteristics of the present invention, the ratio is preferably in the range of about 0.05:1 too 1 x $10^6$:1, more preferably about 0.1:1 to 5 x $10^5$:1, still more preferably about 0.2:1 to 1 x $10^5$:1.

The ionic liquid is called as an ambient temperature molten salt or simply called as a molten salt. For example, according to 'Science' vol. 302, page 792, 2003, the substance is defined as 'a liquid material that is fluid at temperature of not higher than 100°C and is completely composed of ion.' In the present invention, various publicly known ionic liquids can be used for the present invention. However, an ionic liquid that is in a liquid state at normal temperature (at room temperature or at temperature as nearly as possible to room temperature) and is stable and has an ionic conductivity of not less than 0.01S/cm is preferably used in the present invention.

The ionic liquid has almost no vapor pressure, accordingly it has low inflammability and has excellent thermal stability. When the ionic liquid is used as a constituent of the nonaqeous polymer solid electrolyte, an evaporation problem which is a problem of concern for a case in which water or organic solvent is used as an electrolysis solution, can be avoided.

In the present invention, as an example of an organic cation which composes a suitable ionic liquid, following chemical structures represented by the chemical formulae (I) to (V) can be exemplified.

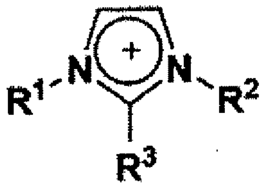

(I)

In the formula (I), $R^1$, $R^2$ and $R^3$ are each independently a hydrogen atom, or a linear or branched alkyl group having a carbon number of 1 to 10, a linear or branched alkenyl group having a carbon number of 2 to 10, an aryl group having a carbon number of 6 to 15, an aralkyl group having a carbon number of 7 to 20 or a polyoxyalkylene group having a carbon number of 2 to 30.

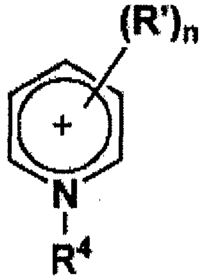

(II)

In the formula (II), $R^4$ is a hydrogen atom, a linear or branched alkyl group having a carbon number of 1 to 10, a linear or branched alkenyl group having a carbon number of 2 to 10, an aryl group having a carbon number of 6 to 15, an aralkyl group having a carbon number of 7 to 20 or a polyoxyalkylene group having a carbon number of 2 to 30, R' is a linear or branched alkyl group having a carbon number of 1 to 6, n is a positive number of 0 to 5. When n is 2 or more, each R' may be the same group or may be a different group.

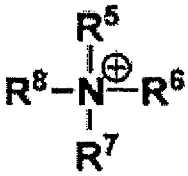

(III)

In the formula (III), $R^5$, $R^6$, $R^7$ and $R^8$ are independently a hydrogen atom, a linear or branched alkyl group having a carbon number of 1 to 10, a linear or branched alkenyl group having a carbon number of 2 to 10, an aryl group having a carbon number of 6 to 15, an aralkyl group having a carbon number of 7 to 20, a polyoxyalkylene group having a carbon number of 2 to 30, or two groups of $R^5$ to $R^8$ join together to form a ring structure.

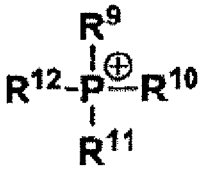

(IV)

In the formula (IV), $R^9$, $R^{10}$, $R^{11}$ and $R^{12}$ are independently a hydrogen atom, a linear or branched alkyl group having a carbon number of 1 to 10, a linear or branched alkenyl group having a carbon number of 2 to 10, an aryl group having a carbon number of 6 to 15, an aralkyl group having a carbon number of 7 to 20, a polyoxyalkylene group having a carbon number of 2 to 30, or two groups of $R^9$ to $R^{12}$ join together to form a ring structure.

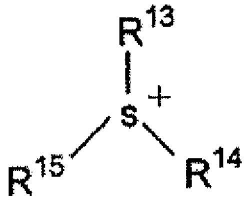

(V)

In the formula (V), $R^{13}$, $R^{14}$ and $R^{15}$ are each independently a hydrogen atom, a linear or branched alkyl group having a carbon number of 1 to 10, a linear or branched alkenyl group having a carbon number of 2 to 10, an aryl group having a carbon number of 6 to 15, an aralkyl group having a carbon number of 7 to 20, a polyoxyalkylene group having a carbon number of 2 to 30, or two groups of $R^{13}$ to $R^{15}$ join together to form a ring structure.

In the definition of $R^1$ to $R^{15}$ of the exemplification of the above mentioned organic cation, as the linear or branched alkyl group having a carbon number of 1 to 10, the alkyl group having a carbon number of 1 to 6 is preferably used, and the carbon number of 1 to 4 is more preferably used. More specifically, methyl group, ethyl group, propyl group, butyl group, etc. can be exemplified. In the definition of $R^1$ to $R^{15}$, as the linear or branched alkenyl group having a carbon number of 2 to 10, the alkenyl group having a carbon number of 2 to 6 is preferably used, and the carbon number of 2 to 4 is more preferably used. More specifically, vinyl group, propenyl group, butenyl group, etc. can be exemplified. In the definition of $R^1$ to $R^{15}$, as the aryl group having carbon number of 6 to 15, phenyl group, naphthyl group, etc. can be exemplified.

In the definition of $R^1$ to $R^{15}$, as the aralkyl group having a carbon number of 7 to 20, benzyl group, phenethyl group, etc. can be exemplified. Likewise, in the definition of $R^1$ to $R^{15}$, as the polyoxyalkylene group having a carbon number of 2 to 30, polyoxyethylene group, polyoxypropylene group, etc. can be exemplified. In the definition of $R^1$, as the linear or branched alkyl group having a carbon number of 1 to 6, methyl group, ethyl group, propyl group, butyl group, etc. can be exemplified. In the definition of $R^5$ to $R^{15}$, as in the case in which two groups join together to form a ring structure, for example, a case in which pyrrolidine ring or piperidine ring is formed in combination with the central atom (N) can be exemplified.

Of them, from the viewpoint of the ionic conductivity and availability of the ionic liquid, non substituted or substituted imidazolium cation represented by the general formula (I) is preferably used, more preferably substituted imidazolium cation is used. Of them, from the viewpoint of the melting point and viscosity of the ionic liquid, it is preferable that $R^1$ and $R^2$ of the general formula (I) is independently a linear or branched alkyl group having a carbon number of 1 to 6. More preferably $R^1$ and $R^2$ is independently a linear or branched alkyl group having a carbon number of 1 to 6 and $R^3$ is hydrogen atom. In these cases, preferably, $R^1$ and $R^2$ are different group. As the most preferable example, 3-ethyl-1-methyl imidazolium cation ($EMI^+$) can be exemplified.

As an example of an anion that composes a preferable example of the ionic liquid used in the present invention, halogen-containing anion, inorganic acid anion, organic acid anion etc. can be exemplified. As an example of the halogen-containing anion or inorganic acid anion, specifically, $PF_6^-$, $ClO_4^-$, $CF_3SO_3^-$, $C_4F_9SO_3^-$, $BF_4^-$, $(CF_3SO_2)_2N^-$, $(C_2F_5SO_2)_2N^-$, $(CF_3SO_2)_3C^-$, $AsF_6^-$, $SO_4^{2-}$, $(CN)_2N^-$, $NO_3^-$, etc. can be exemplified. An example of the organic acid anion, $RSO_3^-$, $RCO_2^-$, etc. can be exemplified. Here, R is an alkyl group having a carbon number of 1 to 4, an alkenyl group having a carbon number of 2 to 4, an aralkyl group having a carbon number of 7 to 20, an aralkenyl group having a carbon number of 2 to 8, an alkoxyalkyl group having a carbon number of 2 to 8, an acyloxyalkyl group having a carbon number of at least 3, a sulfoalkyl group having a carbon number of 2 to 8, an aryl group having a carbon number of 6 to 15 or an aromatic heterocyclic group having a carbon number of 3 to 7.

Of them, from the viewpoint of the ionic conductivity and availability of the ionic liquid, $PF_6^-$, $ClO_4^-$, $CF_3SO_3^-$, $C_4F_9SO_3^-$, $BF_4^-$, $(CN)_2N^-$, and a sulfonylimide series anion such as $(CF_3SO_2)_2N^-$, $(C_2F_5SO_2)_2N^-$ etc. are preferably used, more preferably, sulfonylimide series anions such as $(CF_3SO_2)_2N$-, $(C_2F_5SO_2)_2N^-$ etc. can be used.

As an example of the ionic liquid preferably used for the present invention, an ionic liquid which is a combination of an organic cation and anion can be exemplified. These can be used solely or in combination with a plurality of them. A substituted imidazolium salt is most preferably used in the present invention, specifically, ethylmethylimidazolium bis (trifluoromethane sulfonyl) imide (EMITFSI), ethylmethylimidazolium bis(pentafluoromethane sulfonyl)imide (EMITFSI), bulylmethylimidazolium bis(trifluoromethansulfonyl)imide (EMITFSI), butylmethylimidazolium bis(pentafluoromethansulfonyl)imide (BMIPFSI), etc. can be exemplified. Of them, from the viewpoint of ionic conductivity of the ionic liquid, EMITFSI and EMIPFSI are preferably used. Further, from the viewpoint of availability, EMITFSI is used more preferably.

When there is no ionic liquid there, no ion moves. Accordingly, the sensor function does not work. Further, when a polymer component such as polyethylene, polystyrene etc. that does not have the hetero atom is used, the ion

conductivity remains low due to the lack of miscibility with the ionic liquid even when the ionic liquid is added. When the ionic liquid is further added with an aim to increase the ion conductivity, bleed-out phenomenon occurs, which is undesirable.

The electrodes of the flexible element of the present invention are composed of a positive and negative electrodes and are placed to sandwich the above mentioned nonaqueous polymer solid electrolyte without contacting each other.

In the present invention, the surface resistance of the electrode is not more than 10Ω/square and the electric capacitance of the flexible element is in the range of 0.1 to 500mF per 1 $cm^2$. To satisfy these requirements, a carbon fine particle, solid metal powder, metal oxide powder, metal sulfide powder, conductive polymer, etc. are used. From the viewpoint of electric capacitance, the carbon fine particle or solid metal powder is preferably used as a constituent. From the viewpoint of availability, the carbon fine particle is more preferably used as a constituent.

When a carbon fine particle is used as a constituent of the electrode, there is no specific limitation on the kind of carbon fine particle. Graphite, carbon black, activated carbon, short-cut fiber of carbon fiber, mono-layered carbon nanotube, multi-layered carbon nanotube, etc. can be used. These materials can be used solely or in combination with two or more of them.

Specific surface area of the carbon fine particle is not specifically limited, but the BET specific surface area is preferably in the range of 1 $m^2/g$ to 4,000$m^2/g$, more preferably 5$m^2/g$ to 3,000$m^2/g$. When the BET specific surface area is not more than 1 $m^2/g$, the particle size of the carbon fine particle is large so that the resistance of the electrode increases, accordingly the response sensitivity is not insufficient. On the other hand, when the specific surface area exceeds 4,000$m^2/g$, the electric capacitance increases, accordingly the response sensitivity is not insufficient. The BET specific surface area is a specific surface area measured using BET method in which nitrogen gas absorption isotherm is determined at liquid nitrogen temperature (for example, 'Ultrafine Particle Handbook' 138-141 page, 1990, published by Fujitech Corporation).

As the configuration of the electrode made from these carbon fine particles, from the viewpoint of a surface resistance, electric capacitance, flexibility and adhesiveness, the electrode is preferably comprised of the ionic liquid and a binder resin whose content is 1 to 60% by mass with respect to the carbon fine particle. There is no specific limitation on the kind of binder resin. Commonly-used binder such as polyolefin series resin, halogenated vinyl series resin, polycarbonate series resin, PET series, ABS series resin, polyvinyl acetate series resin, nylon series resin, etc. can be used. From the viewpoint of securing conductive properties of the electrode, a conductive polymer such as polyaniline, polypyrrole, polythiophene, polyparaphenylene, polyethylene dioxythiophene, etc. is preferably used. From the viewpoint of adhesiveness to the nonaqueous polymer solid electrolyte, the same polymer used for the nonaqueous polymer solid electrolyte or the same polymer impregnated with the ionic liquid may be used.

There is no specific limitation on the mass fraction of each of the three ingredients of the electrode, but from the viewpoint of the displacement amount, response sensitivity of sensor, and moldability of the electrode, the carbon fine particle content is preferably in the range of not less than 5% by mass and not more than 90% by mass, more preferably not less than 10% by mass and not more than 80% by mass. In addition, from the viewpoint of the ionic conductivity and mechanical strength of the electrode, the ionic liquid content is preferably in the range of not less than 5% by mass and not more than 90% by mass, more preferably not less than 10% by mass and not more than 80% by mass. The content of the polymer component is preferably in the range of not less than 5% by mass and not more than 80% by mass, more preferably not less than 10% by mass and not more than 70% by mass.

To the electrode, in the fabrication phase in addition to the above mentioned ingredients, if necessary, from the viewpoint of securing conductive properties in the electrode, other electroconductive carbon materials such as carbon black, carbon nanotube, vapor-grown carbon fiber, etc. and/or electroconductive material such as fine metal particles etc. can be added. In use, the amount of the above mentioned electroconductive component to be added is, from the viewpoint of electroconductivity, preferably in the range of not less than 0.1% by mass with respect to the total mass of the constituents (for example, activated carbon, ionic liquid and polymer component) of the above mentioned electrode, more preferably not less than 5% by mass. On the other hand, from the viewpoint of the moldability of the electrode, the amount to be added is preferably in the range of not more than 60% by mass, more preferably 50% by mass. Further, if necessary, other additives such as an antioxidant, antifreezing agent, pH controlling agent, dispersing agent, plasticizer, masking agent , colorant, oil solution, etc. may be added into the resin within the range of not damaging the effect of the present invention.

In the above mentioned electrode, the carbon fine particle may be dispersed in other material of the electrode and may be inhomogeneously dispersed. As an example of the latter case, an electrode comprising: a plane-like layer made of a heat treated carbon fine particle; and a polymer component impregnated with an ionic liquid. The plane-like layer is impregnated with the polymer component containing the ionic liquid and is formed into a membrane-shape, film-shape, sheet-shape, board-shape, textile-shape, rod-shape, cubic-shape or cuboid-like shape. The shape of the electrode is not specifically limited. For example, paper-shape, membrane-shape, film-shape, sheet-shape, board-shape, textile-shape, rod-shape, cubic-shape, cuboid-like shape etc. can be exemplified.

When activated carbon is used as the carbon fine particle, the activated carbon may be prepared by heat-treatment after activation to control the surface area. Temperature of the heat treatment is preferably in the range of 800°C to 3,000°C, more preferably, 900°C to 2,500°C. When heat-treating temperature is less than 800°C, structural change of fine pores of the activated carbon is insufficient so that the response sensitivity of the sensor may be deteriorated. On the other hand, when heat-treating temperature is higher than 3,000°C, the shrinkage of the fine pores of the activated carbon excessively proceeds so that the response sensitivity of the sensor may be deteriorated. The heat treating is carried out under inert gas atmosphere, for example, nitrogen or argon gas.

When a solid metal powder is used as a constituent of the electrode, there is no specific limitation on the kind of the solid metal powder. For example, gold, silver, platinum, copper, iron, palladium, nickel, aluminum etc. can be used. These materials may be used solely or in combination of two or more of them. If necessary, an adhesive or binder resin can be used together with the metal powder in order to improve adhesiveness and flexibility. When the electrode is made of a single material, the resulting electrode has low electric capacitance so that a composite material made from the above solid metal powder and the resin is preferably used from the viewpoint of the electric capacitance.

There is no specific limitation on the manufacturing method of the electrode that comprises solid metal powder as a constituent. For example, as a publicly known method, an ink which is made by dissolving or dispersing the above mentioned electrode material into an appropriate binder, is firstly produced and then the ink is applied. In addition, there is no specific limitation on the binding process between the nonaqueous polymer solid electrolyte and the electrode. The binding process, for example, can be carried out by directly applying the above mentioned ink on the nonaqueous polymer solid electrolyte, by previously applying the ink on an insulator film and then pressure bonding or welding, or by bonding the electrode to the nonaqueous polymer solid electrolyte using adhesive agent.

In a case where a transparent electrode is required, for example, an electrode made by vapor deposition of metal oxide such as indium-tin-oxide (ITO), antimony-tin-oxide (ATO) or zinc oxide; by coating of mono-layered carbon nanotube, multi-layered carbon nanotube which are dispersed in a solvent; by coating of a conductive polymer such as polyethylene dioxythiophene, etc. can be exemplified. In addition, when flexibility is required, the above mentioned materials are applied using a vapor deposition method or coating method on a film made of PET, etc.

Attention is now focused on a voltage generated by the deformation sensor. Here, Q is a charge amount generated at the electrode when deformed, and C is an electric capacitance of the flexible element. Voltage V generated when the deformation sensor is deformed is calculated by the following equation.

$$V=Q/C \qquad \ldots(1)$$

From equation (I), in order to heighten the generated voltage V, it is necessary to minimize the electric capacitance C of the flexible element, because a charge amount Q generated at the electrode is constant.

When resistance of the electrode is large, a charge generated at the electrode is partly converted into Joule heat and then dissipated. Accordingly, from the viewpoint that the charge amount Q generated at the electrode should be effectively converted into voltage, the surface resistance of the electrode is required to be lowered.

From these facts, in order to achieve high responsiveness of the present invention, surface resistance of the electrode and electric capacitance of the flexible element should be lowered. That is, the surface resistance of the electrode is not more than 10Ω/square, preferably not more than 5Ω/square, more preferably not more than 3Ω/square. It is important that the electric capacitance per 1cm$^2$ of the electrode is in the range of 0.1 to 500mF. Here, in order to lower the electric capacitance C, preferably, the electrolyte should have a lower dielectric constant. Because the dielectric constant is derived from the polarization of materials, accordingly it is important to exclude an ionic dissociative group which could triggers the polarization. In addition, in order to decrease the surface resistance, multiple electrodes having a solid metal-like conductive layer, which has high electric conductivity about 100 times higher than that of the surface of the electrode, may be provided on the electrode's surface that does not abut on the polymer electrolyte's surface. The conductive layer that has conductivity about 100 times higher than that of the electrode surface is called a 'power collecting layer'.

There is no specific limitation on the method of attaching the power collecting layer to the electrode. As publicly known methods for metallization, for example, a vacuum deposition method; a sputtering method; an electrolytic plating method; and non-electrolytic plating method can be exemplified. Also a method to apply an ink comprising an appropriate binder and a power collecting material dissolved or dispersed in the binder: and a method to pressure bond, adhere or weld the power collecting layer formed on an insulation sheet to an electrode with or without adhesive: etc. can be exemplified. Preferred method is, from the viewpoint of adhesiveness to the electrode and mechanical strength of the sheet, at first the power collecting layer is formed on a flexible elastomeric film as the insulation sheet and then the power collecting layer is pressure bonded, welded directly or adhered with the adhesive to the electrode.

As seen from the equation (1), in order to increase the voltage V, it is necessary to increase the charge amount

Q that is generated at the electrode. To increase the charge amount Q that is generated at the electrode, ion conductivity of the nonaqueous polymer solid electrolyte should be increased. However, when the ion conductivity of the nonaqueous polymer solid electrolyte excessively increases, the electric capacitance C also increases, and the response sensitivity is decreased. Further, when the amount of the ionic liquid is increased, the moldability of the sensor becomes deteriorated.

As mentioned above, the ion conductivity of the nonaqueous polymer solid electrolyte is preferably in the range of not less than 1 x $10^{-7}$S/cm and not more than 1 x $10^{-1}$S/cm, more preferably not less than 1 x $10^{-6}$S/cm and not more than 5 x $10^{-2}$S/cm, still more preferably not less than 1 x $10^{-5}$S/cm and not more than 1 x $10^{-2}$S/cm,

There is no specific limitation on the shape of the deformation sensor of the present invention. For example, a membrane-like, film-like, sheet-like, board-like, fabric-like, rod-like, cube-like, cuboid-like shape, etc. are exemplified. The shape can be arbitrarily selected depending on the intended use. In addition, there is no specific limitation on the thickness of the deformation sensor. For example, when the shape of the sensor is membrane-like shape, the electrode is preferably formed on both surfaces of the membrane and from the viewpoint of the resistance of the membrane itself, the thickness is preferably in the range of $10^{-6}$ to $10^{-1}$m.

The above described deformation sensor of the present invention can be used as it is. However, it is desirable to provide a protective layer to the sensor with an aim to keep the mechanical strength as well as water retention ability. In order to connect the electrode to an external circuit, a lead portion such as a conducting wire, etc. may be added.

As shown in Fig. 1 of a cross-sectional view, a deformation sensor 6 has a nonaqueous polymer solid electrolyte 10 and a positive electrode 7 and a negative electrode 8 are placed so as to sandwich the solid electrolyte 10. The electrodes 8 and 7 are connected to power collecting layers 4 and 2. The electric conductivity of the power collecting layers 4 and 2 has a considerably increased conductivity about 100 times that of the electrodes 8 and 7. When the nonaqueous polymer solid electrolyte 10 is deformed, the ions + and - moves, generating a voltage bias and accordingly a potential difference. When the nonaqueous polymer solid electrolyte 10 is largely deformed, electric charge flows to the power collecting layers 2 and 4 through the electrodes 7 and 8 around which the electric charge to an external circuit is more biased. The generated voltage is proportional to the amount of deformation when the sensor detection part is deformed. Therefore, the amount of deformation can be determined.

When the electrode has a pattern or an electrode pattern, deformation information in the direction of height at each pattern can be converted into a voltage. And each electrode pattern functions independently. Accordingly, at least one side of electrode of the pair of electrodes should preferably have a pattern shape so as to determine a position of deformation. At this time, the displacement information (i.e. the amount of displacement) in the direction of height can be converted into a voltage, accordingly the sensor can be used as displacement sensor or a position sensor. From a relationship between the displacement amount and a bending elastic modulus, a pressure can be converted into a voltage so that the sensor can be used as a pressure distribution sensor.

Fig. 2 is a perspective view showing a shape of an electrode pattern. On one surface of the nonaqueous polymer solid electrolyte, Y direction stripes (i.e. stripe shape) electrodes $12_1$, $12_2$, $12_3$ ... are arranged side by side in X direction, and on the rear surface, X direction stripe electrodes $13_1$, $13_2$, $13_3$ ...are arranged side by side in Y direction. When P position is pushed to let it deform, signals are sent out from the stripe electrode $12_2$ and the stripe electrode $13_2$, and an external circuit which is connected to the stripe electrodes can detect the position of deformation.

As another electrode pattern, for example, on one surface of the nonaqueous polymer solid electrolyte 10, Y direction stripe electrodes $12_1$, $12_2$, $12_3$ ... are arranged side by side in X direction (refer to Fig. 2). On the rear surface, a full area electrode (not shown) is provided. Each stripe of the stripe electrodes $12_1$, $12_2$, $12_3$ ... is connected to an end terminal of an external circuit or of a scanning circuit under independently insulated conditions. Accordingly, one dimensional deformation position in X direction can be detected. For example, when P position is pushed to be deformed, outputs from the whole area electrode and the stripe electrode $12_2$ are conveyed into the external circuit. The external circuit recognizes the displacement position on the line of the stripe electrode $12_2$.

Fig. 3 is a plan view showing an electrode having another pattern. In this pattern, on one surface (corresponding to the rear surface of this paper on which Fig. 3 is drawn) of the nonaqueous polymer solid electrolyte, X direction stripe electrodes (shown by dashed lines) are arranged side by side in Y direction. On the other surface, stripe electrodes (solid lines, spotted portions) are arranged side by side in a declining manner with a certain angle.

Fig. 4 is a plan view showing an electrode having still another pattern. On one surface (i.e. rear surface of Fig. 4) of the nonaqueous polymer solid electrolyte, Y direction stripe electrodes (dashed lines) are arranged side by side in X direction. On the opposite side surface, wave lines stripe electrodes having a repeated wave lines (solid lines, spotted portions) extending in X direction are arranged side by side in Y direction.

Considering the electric loss which is converted into a form of Joule heat when the electric current flows through the stripe electrode, Fig. 2 shows a preferable shape of the electrode because the distance between each grid and the end terminal can be made short.

Among the detecting point of the sensor, the more the number of crossing points of the electrode patterns is made, the more the resolution performance is improved. Here, the crossing points are seen when seen through the two electrode patterns. Further, the larger the total area of the crossing point is made, the larger the detecting area becomes,

and the degree of reliability as a sensor is improved. Accordingly, the distance between the electrode patterns (or blank space where there are no stripe) is 'the shorter the better'. For example, the distance is in the range of not less than about 0.1 μm and not more than about 1.5cm, preferably not less than 0.1μm and not more than 1.5cm, more preferably not less than 0,1μm and not more than 1cm. When the distance between the electrode patterns exceeds 2cm, the number of crossing points decreases so that the resolution performance tends to be lowered and undesirable. When the distance between the electrodes becomes less than 0.1μm, electrode patterns adjacent to each other tend to be undesirably short-circuited at the time of manufacture.

Further, an electrode pattern width (i.e. width of the stripe) is preferably in the range of not less than 0.1μm and not more than 2cm, more preferably not less than 0.1μm and not more than 1.5cm, still more preferably, not less than 0.1μm and not more than 1cm. When the electrode pattern width exceeds 2cm, the resolution performance becomes deteriorated, and when the electrode pattern width is less than 0.1μm, the electrodes become hard to manufacture.

The total area of the electrode is preferably in the range of not less than 80% with respect to the total surface of the nonaqueous polymer solid electrolyte, more preferably not less than 85%, still more preferably not less than 90%. When the total area of the electrode is less than 80%, the total area of the sensing portion becomes too low, and use efficiency of the sensor becomes low and undesirable.

The electrode patterns which are each provided on each surface of the nonaqueous polymer solid electrolyte may be the same configuration. A configuration of a square-like electrode pattern is shown in Fig. 5. A place where each electrode patterns $15_1$, $15_2$. $15_3$ ... is placed is a sensing portion. Lead bodies $15A_1$, $15A_2$, $15A_3$ ... are provided which are used for connection with the external circuit. Here, the lead bodies are not provided and instead welding of the lead wire or a contact connection can be arbitrarily adopted for connecting respective electrode patterns $15_1$, $15_2$, $15_3$ ... with the external circuit. The configuration of the electrode pattern of the upper and lower surfaces are preferably the same pattern, but either of them may be a whole area electrode.

There is no specific limitation on the configuration of the electrode pattern. Polygonal shape such as triangle as shown in Fig. 6, polygonal shape of hexagonal shape as shown in Fig. 7 can be used. Circular shape as shown in Fig. 8 and oval shape can also be used. However, detection is not carried out where there is no electrode pattern so that it is preferable that the electrode pattern is densely arranged. Simpler configuration is desirable to analyze the detected output from the electrode pattern.

The shorter the distance between each electrode pattern is, the more preferable. Concerning the size of the electrode pattern, when the shape is square as shown in Fig. 5, the length of the side thereof is preferably in the range of not less than 0,1μm and not more than 2cm, more preferably not less than 0.1μm and not more than 1.5cm, still more preferably not less than 0.1μm and not more than 1cm. When the length of the side exceeds 2cm, resolution performance becomes deteriorated. Further, when the side length is less than 0.1μm, manufacture thereof becomes difficult. The size of the shape other than the square shape does not so differ from the case of the square.

There is no specific limitation on the method of bonding the electrode pattern to the nonaqueous polymer solid electrolyte. As a publicly known method, non-conductive portion (blank space between the electrode pattern) is masked and, ink comprising a conductive material and optional appropriate binder that are dissolved or dispersed therein is applied on it, or in the above mentioned method, the electrode pattern is previously bonded with an insulator film such as PET, and then the insulator film bonded with the electrode pattern is pressure bonded or welded or adhered via adhesive to the nonaqueous polymer solid electrolyte, can be exemplified.

Similar effect is obtained by forming the electrode on the whole area and then the power collecting layer is formed into the above mentioned pattern shape. That is, in Fig. 1, the power collecting layers 2 and 4 have electric conductivity about 100 times higher than that of the electrodes 7 and 8. According to the difference of voltages generated from the biased electric charge caused from the move of ion+ and - under the deformation of the nonaqueous polymer solid electrolyte, large amount of electric current flows into the conductive pattern portion and accordingly voltage signal becomes large. Accordingly, when compared to a place where there is no power collecting layer, at a place where the power colleting layer exists, voltage signal becomes considerably large so that actually the deformation only at the power collecting portion can be detected.

The deformation sensor of the present invention can be used as speed or acceleration sensors for air bags of automobiles, controllers for game machines, cell-phones, personal digital assistances, various types of robots, image stabilizers for cameras, microelectromechanical systems (MEMS), etc.; pressure sensors for intruder detectors, load cells, obstruction detectors, emergency operators at the time of impacts, microphones, sonars, switches for precision apparatuses such as cameras, keyboards of electric musical instruments, MEMS, etc.; current velocity sensors for air speedometers, water gages, electricity generators, etc.; curvature or angle measure sensors for potentiometers, rotary encoders, etc.; displacement sensors or position sensors for robot, etc.; machine controllers of emergency shutdown systems; antenna sensors for artificial skins; etc.

Hereinafter, the present invention will be explained more specifically with reference to Reference Examples, Examples and Comparative Examples. The present invention is not limited to these explanations. Measuring instruments, measuring procedures and materials used in Reference Examples, Examples and Comparative Examples will be explained below.

(1) Analysis of Copolymer (P) and Ionic Liquid using Nuclear Magnetic Resonance Spectrum ($^1$H-NMR)

Instrument: Nuclear Magnetic Resonance Spectrum (JNM-LA 400) produced by JEOL Ltd.
Solvent: chloroform-d (copolymer), and dimethyl sulfoxide-d6 (ionic liquid)

(2) Measurement of Number Average Molecular Weight (Mn) and Molecular Weight Distribution (Mw/Mn) by Gel Permeation Chromatography (GPC)

Instrument: Gelpermeation Chromatography (HLC-8020) produced by Tosoh Corporation
Column: TSKgel (GMHXL, G4000HXL and G5000HXL were serially-concatenated) produced by Tosoh Corporation
Eluent: Tetrahydrofuran, flow rate 1.0mL/min.
Calibration Curve: Standard Polystyrene
Detection Method: Differential Refractometer (RI)

(3) Measurement of Ionic Conductance

Instrument: Chemical Impedance Meter 3532-80 produced by Hioki E.E. Corporation
Method: Complex Impedance Method using an AC 4-terminal Cell, Measurement was carried out at 25°C after nonaqueous polymer solid electrolyte was subjected to humidity conditioning treatment for one night at 25°C/11Rh%.

(4) Measurement of Surface Electric Resistance of Electrode and Composite Electrode (Combination of Electrode and Power Collecting Layer)
A 100μm thick membrane-like insulator film, on which an electrode, composite electrode or a power collecting layer was formed, was cut into a size of 50mm x 5mm as a specimen. Surface resistances at five locations of each specimen were measured using an electric resistance measurement apparatus (Laresta-GP MCP-T610, produced by Mitsubishi Chemical Corporation) and then average value was calculated. The surface resistance of the composite electrode was the lowest surface resistance value selected from the surface resistances of the electrode and the power collecting layer.

(5) Measurement of Electric Capacitance of Flexible Elements Samples comprising a pair of composite electrodes (a power collecting layer was provided on the whole area of the electrode) and a nonaqueous polymer solid electrolyte were made into a size of 20mm x 20mm. The power collecting layer was connected to a discharge and charge appliance (HJ-201B, produced by Hokuto Denko Corporation) through a lead lines and the electric capacitance of the sample was determined from a discharge curve after a constant-current (1mA) charge-and-discharge cycle test was repeated 10 times.

(6) Measurement of Response Sensitivity of Deformation Sensors
The response sensitivity of the deformation sensor was defined as a voltage generated when a certain amount of displacement was given. A sample of the deformation sensor was prepared by cutting the deformation sensor having a nonaqueous polymer solid electrolyte the whole area of which was sandwiched by the electrodes, into a size of 20mm x 10mm. At a central portion of one surface of each of the two insulator films having a size of 30mm x 20mm, a power collecting layer having a size of 20mm x 10mm was formed. As shown in Fig. 9, on both surfaces of the deformation sensor 6, two insulator films 20A and 20B was laminated so as to fit each power collecting layer to each surface of the deformation sensor, thus obtaining the measurement sample 21. When the power collecting layers 2 and 4 were laminated onto the deformation sensor 6, lead wires 22 and 24 were each clamped so as to ensure electric conduction with respect to the power collecting layers 2 and 4.
The measurement sample 21 was clamped with a fixing jigs 26, 28 so as to allow a remaining half-long (10mm-long) portion of the 20mm-long sample stay in the air, and the lead wire 22, 24 were connected to a data logger 9 (NR-ST04, produced by Keyence Corporation). In this situation, a voltage generated at the time of displacement given to the sample was measured by the data logger 9 and then noise/signal voltage ratio (S/N ratio) was calculated. When displacement was given, an angle between the initial position of the sample and a position of the sample at the time displacement was given was preset to 11°. The noise was defined as a difference between the maximum and minimum voltages other than the signals in voltage changes measured during the time period of 20 seconds. At a position P 5mm away from the fixed edge of the electrode, LASER was irradiated using LASER displacement

meter (not shown, LK-G155, produced by Keyence Corporation) so as to measure a given amount of displacement.

(7) Quantitative Capability Evaluation of Deformation Sensors
The same method as in the measurement of the response sensitivity mentioned above was used and 5 different amounts of deformation were given to samples. The generated voltages were measured using a data logger. Then correlation coefficient between the deformation amounts and generated voltages was calculated. The amounts of deformation were set by setting an angle of 4.6, 6.8, 9.1, 11.3, 13.5°. These angles were formed between an initial position of a sample and a position of the same sample after the deformation was given.

(8) Evaluation of Sensing Characteristics of Deformation Sensors having Pattern Electrode
In the deformation sensor having an electrode pattern, an m-row and n-column pattern of Figs. 2, 3 and 4, and a top and a bottom electrode pattern of Figs. 5, 6, 7 and 8 were connected to a data logger (NR-ST04, produced by Keyence Corporation). In this situation, when displacement was given, generated voltage was measured by the data logger, and then noise to signal voltage ratio (S/N ratio) was calculated. The given amount of displacement was set to 500μm by setting the difference between the initial position of the sample and a position after the displacement was given.

Next, when 500μm of displacement was given to a pattern electrode next to a pattern electrode which was connected to the data logger, a generated voltage was measured at the above mentioned data logger and then a noise to signal voltage ratio (S/N ratio) was calculated. Here, the noise was defined as a difference between the maximum and minimum voltages other than the signals in voltage changes measured during the time period of 20 seconds.
Here, the given amount of the displacement was measured by irradiating LASER using a LASER displacement meter (LK-G155, produced by Keyence Corporation).

« Reference Example 1 »

Manufacture of Polystyrene-b-polymethylacrylate-b-polystyrene (P-1) Ingredients:

Copper bromide (I), copper chloride (I) and copper chloride (II) were purchased from Wako Pure Chemical Industries, Ltd. and used as they were. 1, 1, 4, 7, 10, 10 hexamethyltriethylene tetramine (HMTETA) was purchased from Aldrich Corporation and used as it was. Tris(2-dimethylaminoethyl) amine (Me6-TREN) was used after refluxing an aqueous mixture of tris(2-aminoethyl)amine, formic acid and formamide, and then the resulting product was distilled under a reduced pressure. Diethyl-meso-2, 5-dibromoadipate was purchased from Aldrich Corporation and was used as it was. Styrene and methylacrylate was purchased from Kishida Chemical Co.,Ltd., and prior to use, they were contacted with zeorum and alumina to eliminate polymerization inhibitor, and then dissolved oxygen was removed by bubbling dry nitrogen gas. Acetonitrile was purchased from Kishida Chemical Co.,Ltd. and water was removed by contacting it with zeorum, and then dissolving oxygen was removed by bubbling dry nitrogen gas before use. Other ingredients were purified depending on the intended use.

(1) In a 2 litter three-necked flask, a magnetic stirrer, 7.17g (50mmol) of copper bromide (I), 3.6g (10mmol) of diethyl-meso-2,5-dibromoadipate were placed, and then the inside of the flask was fully substituted with dry nitrogen gas. 955mL of acetonitrile and 785mL of methyl acrylate were added and stirring was continued for 30 minutes at room temperature. After that, temperature was raised to 50°C. 8.33mL (16.7mmol as HMTETA) of acetonitrile solution of HMTETA (concentration, 0.3mol/L) was added to start polymerization reaction. Two hours after the initiation of the polymerization reaction, 2.08 mL (0.62mmol as HMTETA) of acetonitrile solution of HMTETA (concentration, 0.3mol/L) was added, and polymerization was further continued for another 6 hours.

(2) After 6 hours, the flask was dipped into ice water, cooling the polymerized solution to terminate the polymerization reaction. Conversion was 38%, number average molecular weight was 28,700 and molecular distribution Mw/Mn was 1.04 at the time the polymerization was terminated.

(3) The resulting polymerization solution was evaporated using an evaporator and then diluted with toluene. And then, washed in water repeatedly, removing a residual catalyst. After washing, the solution was evaporated again to concentrate. Then it was poured into a large excess of methanol to reprecipitate, obtaining a viscous liquid material. The material was dried using a vacuum dryer at 70°C for one night, obtaining polymethylacrylate that was brominated at both terminal ends.

(4) In a two litter three-necked flask, 170g of polymethylacrylate that is brominated at both terminal ends and a

magnetic stirrer were placed and the flask was fully substituted with dry nitrogen gas. And 152 mL of styrene was added to dissolve the polymethylacrylate that was brominated at both terminal ends. The resulting solution was heated up to 40°C, and 0.586mg (5.92mmol) of separately prepared mixture of copper chloride (I), 0.239mg (1.78mmol) of copper chloride (II) and 29.6 mL (8.89mmol as Me6-TREN) of acetonitrile solution of Me6-TREN (concentration, 0.3mol/L) was added to start polymerization.

(5) After 8-hour polymerization period, the flask was dipped into ice water to cool the polymerization solution to terminate the polymerization reaction. At the time the polymerization was terminated, the conversion was 10%, number average molecular weight Mn was 72,000 and molecular distribution Mw/Mn was 1.31.

(6) The resulting polymer solution was reprecipitated in a large excess of methanol, dried at room temperature, dissolved again in toluene and washed with water repeatedly to remove the residual catalyst, After that, the polymer was reprecipitated in a large excess of methanol and the solid obtained was dried at 70°C for one night.

(7) As mentioned above, a copolymer (P-1) comprising a polymer block (Pa) that had a polymethylacrylate (PMA) and a polymer block (Pb) that had polystyrene (PSt) was obtained. $^{1}$H-NMR measurement showed that PSt content in the copolymer (P-1) was 46%, PMA content was 54%.

« Reference Example 2 »

Manufacture of Ethylmethylimidazolium bis (trifluoromethanesulfonyl) imide (ionic liquid)

Ingredients: Lithiumbis(trifluoromethylsulfonyl) imide produced by Tokyo Chemical Industry Co., Ltd. was used as it was. Cyclohexane produced by Kishida Chemical Co.,Ltd. was used as it was. Other ingredients were purified depending on the intended use.

(1) To a 500mL separable flask, a mechanical stirrer having a stirring blade, three-way cock and condenser were attached. In the flask, 250mL of cyclohexane, 50mL of 1-methylimidazole (0.58mol) were placed. 1-methylimidazole was not fully dissolved in cyclohexane, two-phase separation was observed. Under agitation, 130mL (1.74mol) of bromoethane was added dropwise at room temperature over one hour. After the end of the dropping, the solution was heated up to 80°C and refluxed for 24 hours. With progress of reaction, white solid substance precipitated.

(2) From the resulting suspension, excess bromoethane and cyclohexane were removed under reduced pressure. The resulting white solid substance was purified by recrystalization using ethyl acetate/isopropanol mixed solvent (1/1 v/v). The otained crystal was filtered and separated, washed with n-hexane and dried at 50°C for one night under reduced pressure. The amount of the obtained product and yield were 91g and 83% respectively. $^{1}$H-NMR showed that the white solid material was 3-ethyl-1-methylimidazoliumbromide (EMIBr) which was the objective substance.

(3) 45g (236mmol) of the obtained EMIBr was charged into a 500mL separable flask with a stirring blade, mechanical stirrer and three-way cock. 120mL of distilled water was added to completely solve EMIBr.

(4) 68g (236mmol) of litium(bistrifloromethanesulfonyl) imide was dissolved in 240mL of distilled water to obtain aqueous solution. The aqueous solution was added dropwise into the above-mentioned EMIBr aqueous solution under stirring. After dropping, reaction was continued for one hour at temperature of 70°C. The resulting reaction solution was separated into two phases.

(5) The lower phase of the resulting two-phase solution was drawn out and diluted with methylene chloride and then washed with distilled water three times. After washing, evaporation under the reduced pressure was carried out at 80°C for 3 hours to remove methylene chloride and a portion of water. The resulting clear and colorless liquid was vacuum dried at 120°C for 3 days to completely remove water from the system. The amount of obtained product and yield were 61g and 67% respectively. $^{1}$H-NMR measurement of the clear and colorless liquid showed 3-ethyl-1-methylimidazolium bis(trifloromethanesulfonyl) imide (EMITFSI) which was the objective substance.

« Reference Example 3 »

Manufacture of Nonaqueous Polymer Solid Electrolyte using Polystylene-b-polymethylacrylate-b-polystyrene Copolymer The copolymer (P-1) was completely dissolved in tetrahydrofuran. To this solution, a given amount of EMITFSI

was added to obtain a homogeneous solution. The solution was spread on a glass to dry. The resulting transparent and flexible solid was vacuum dried at 50°C to obtain the nonaqueous polymer solid electrolytes (E-1 to E-3).

« Reference Example 4 »

Manufacture of Electrode containing Carbon Fine Particles

(1) Given amounts of an activated carbon which was an alkali activated carbon and had a BET specific surface area of 1210$m^2$/g, acetylene black ('Denka Black' produced by Denki Kagaku Kogyo Kabushiki Kaisha), PVDF-HFP ('Kynar #2801', produced by Arkema Inc.) and EMITFSI were weighed into a mortar and mashed up to make a block electrode material.

(2) The obtained block electrode material was sandwiched with PET film and then heat pressed at a temperature of 130°C to obtain a 100μm-thick electrode film containing carbon fine particles.

« Reference Example 5 »

Manufacture of Urethane Electrode having Power Collecting Layer

(1) Polyol polymer (POH-1) ('Kuraray Polyol A-1010' (Trade Name) produced by Kuraray Co.,Ltd.), 1,4 butanediol (BD) (produced by Wako Pure Chemical Industries, Ltd.) and 4,4'-diphenylmethanediisocyanate (MDI) (produced by Wako Pure Chemical Industries, Ltd.) as chain elongation agents were blended in a mole ratio of POH-1/BO/MDI = 1.0/1.8/2.8 (nitrogen atom content was 4.2% by weight) and continuously fed into a biaxual screw-type extruder (30mmΦ, L/D=36, whose screws rotates in the same direction) by way of a constant rate pump in a total feed rate of 200g/min. to carry out a continuous melting polymerization. At this time, the heating zone of this extruder was divided into three zones such as a front zone, intermediate zone and rear zone. The temperature of the front zone, intermediate zone and rear zone was set up to 90 to 220°C, 260°C and 220°C respectively. Obtained molten material of thermoplastic polyurethane was extruded in a strand shape continuously into water and then cut into a shape of a pellet by a pelletizer. The pellets were dried at 80°C for 4 hours. The obtained pellets were fed into a T die type extruding molder to mold them into a film having a thickness of 100μm, thus obtaining an electrode.

(2) On this urethane film, a conductive coating material such as silver paste ('Varniphite M-15A', produced by Nippon Graphite Industories,Ltd.) was applied using screen printing method or gold was applied using screen printing method or spattering method, to obtain a urethane film having a power collecting layer.

« Reference Example 6 »

Manufacture of Flexible Element comprising Nonaqueous Polymer Solid Electrolyte and a pair of Composite Electrode Both surfaces of the nonaqueous polymer solid electrolyte were clamped by electrodes, electroconductive lead portions ('Electroconductive Tape' produced by 3M Limited) and urethane films having power collecting layers in this order and then heat-pressed at 130°C to obtain a flexible element having a laminated structure, as shown in Fig. 1, of composite electrode - nonaqueous polymer solid electrolyte membrane - composite electrode.

« Reference Example 7 »

Deformation Sensor having Electrode Pattern

Given amounts of activated carbon having a BET specific surface area of 1210$m^2$/g, acetylene black ('Denka Black' produced by Denki Kagaku Kogyo Kabushiki Kaisha), PVDF-HFP ('Kynar #2801' produced by Arkema Inc.) and EMITFSI were weighed into a mortar and mashed up to obtain a block mixture. The block mixture was dissolved into N-methylpyrrolidone (produced by Wako Pure Chemical Industries, Ltd.) to obtain an electroconductive paint containing carbon fine particles.

Next, on the urethane film produced by a method in Reference Example 5, a silver paste ('Varniphite M-15A' produced by Nippon Graphite Industories,Ltd.), a sort of electroconductive paint, was applied using a screen printing

method and then the electroconductive paint having the above mentioned carbon fine particles was applied using a screen printing method to obtain a composite electrode having a pattern.

The both surfaces of the nonaqueous polymer solid electrolyte was sandwiched with the composite electrode having the pattern made of silver paste and then heat-pressed at 130°C to obtain a deformation sensor having a laminated structure composed of a composite electrode - nonaqueous polymer solid electrolyte - electrode.

Likewise, on a urethane film with a mask having a desired pattern, gold was applied using spattering method and then the electroconductive paint having the above mentioned carbon fine particles was coated using a screen printing method to obtain a composite electrode having a pattern made of a gold foil.

The both surfaces of the nonaqueous polymer solid electrolyte was clamped with the composite electrode having the pattern and then heat-pressed at 130°C to obtain a deformation sensor having a laminated structure of a composite electrode/nonaqeous polymer solid electrolyte/electrode.

« Comparative Reference Example 1 »

Manufacture of Nonaqueous Polymer Solid Electrolytes (E-4 to E-6) having Polymer containing Ionic Dissociative Group Nafion membrane ('Nafion-117' produced by Wako Pure Chemical Industries, Ltd.) was immersed into a sodium chloride aqueous solution of 0.5 mol/L for two days and then washed with water then vacuum dried at 120°C to obtain a neutralized Nation membrane.

The obtained Nafion membrane was immersed into I-ethyl-3-mefhylimidazolium trifluromethanesulfonate (EMITf produced by Aldrich) at 80°C, then the membrane surface is washed with methanol and then vacuum dried at 120°C to obtain nonaqueous polymer solid electrolytes (E-4 to E-6).

Here, the amount of EMITf in the nonaqueous polymer solid electrolyte was calculated by subtracting a weight of the electrolyte before the immersion from a weight of that after the immersion. In addition, the amount of composition of EMITf was controlled by changing the time of immersion of the Nation membrane in EMITf.

« Examples 1 to 12 »

Deformation Sensor comprising Nonaqueous Polymer Solid Electrolyte and Composite Electrode

Compositional ratios of nonaqueous polymer solid electrolyte and electrode which were produced according to the Reference Examples are shown in Table 1.

Table 1

| Ex. No. | Polymer Solid Electrolyte | Polymer Component (B) | Ionic Liquid (A) | (A)/(B) wt Rratio | Composite Electrode | Binder Resin (B') | Ionic Liquid (A') | Active Material (C) | Conductive Material (D) | (A')/(B')/(C)/(D) wt Ratio | Power Collecting Layer |
|---|---|---|---|---|---|---|---|---|---|---|---|
| 1 | E-1 | P1 | EMITFSI | 1 | F-1 | Kynar #2801 | EMITFSI | Activated Carbon | Acetylene Black | 1.5/0.3/0.5/0.2 | Silver Paste |
| 2 | E-1 | P1 | EMITFSI | 1 | F-2 | Kynar #2801 | EMITFSI | Activated Carbon | Acetylene Black | 1.5/0.3/0.5/0.2 | Gold |
| 3 | E-1 | P1 | EMITFSI | 1 | F-3 | Kynar #2801 | EMITFSI | Activated Carbon | Acetylene Black | 1.5/0.3/0.8/0 | Silver Paste |
| 4 | E-2 | P1 | EMITFSI | 1.6 | F-4 | Kynar #2801 | EMITFSI | Activated Carbon | Acetylene Black | 1.5/0.3/0.8/0 | Gold |
| 5 | E-2 | P1 | EMITFSI | 1.6 | F-1 | Kynar #2801 | EMITFSI | Activated Carbon | Acetylene Black | 1.5/0.3/0.8/0.2 | Silver Paste |
| 6 | E-2 | P1 | EMITFSI | 1.6 | F-2 | Kynar #2801 | EMITFSI | Activated Carbon | Acetylene Black | 1.5/0.3/0.8/0.2 | Gold |
| 7 | E-2 | P1 | EMITFSI | 1.6 | F-3 | Kynar #2801 | EMITFSI | Activated Carbon | Acetylene Black | 1.5/0.3/0.8/0 | Silver Paste |
| 8 | E-2 | P1 | EMITFSI | 1.6 | F-4 | Kynar #2801 | EMITFSI | Activated Carbon | Acetylene Black | 1.5/0.3/0.8/0 | Gold |
| 9 | E-2 | P1 | EMITFSI | 1.6 | F-1 | Kynar #2801 | EMITFSI | Activated Carbon | Acetylene Black | 1.5/0.3/0.8/0.2 | Silver Paste |
| 10 | E-3 | P1 | EMITFSI | 3 | F-2 | Kynar #2801 | EMITFSI | Activated Carbon | Acetylene Black | 1.5/0.3/0.5/0.2 | Gold |
| 11 | E-3 | P1 | EMITFSI | 3 | F-3 | Kynar #2801 | EMITFSI | Activated Carbon | Acetylene Black | 1.5/0.3/0.8/0 | Silver Paste |
| 12 | E-3 | P1 | EMITFSI | 3 | F-4 | Kynar #2801 | EMITFSI | Activated Carbon | Acetylene Black | 1.5/0.3/0.8/0 | Gold |

« Comparative Examples 1 to 7 »

Deformation Sensor comprising Nonaqueous Polymer Solid Electrolyte and Composite Electrode

Compositional ratios of noneaquous polymer solid electrolyte and composite electrodes produced according to Reference Examples and Comparative Reference Examples are shown in Table 2. Here, in the composite electrode F-7, as an active material or an activated carbon, a sort of alkaline activated carbon having a BET specific surface area of 3,300$m^2$/g was used.

Table 2

| Comp Ex. No. | Polymer Solid Electrolyte | Polymer Component (B) | Ionic Liquid (A) | (A)/(B) wt Ratio | Composite Electrode | Binder Resin (B') | Ionic Liquid (A') | Active Material (C) | Conductive Material (D) | (A')/(B')/(C)/(D) wt ratio | Power Collecting Layer |
|---|---|---|---|---|---|---|---|---|---|---|---|
| 1 | E-2 | P1 | EMITFSI | 1.6 | F-5 | Kynar #2801 | EMITFSI | Activated Carbon | Acetylene Black | 1.5/0.3/0.5/0.2 | ----- |
| 2 | E-2 | P1 | EMITFSI | 1.6 | F-6 | Kynar #2801 | EMITFSI | Activated Carbon | Acetylene Black | 1.5/0.3/0.5/0 | ----- |
| 3 | E-2 | P1 | EMITFSI | 1.6 | F-7 | Kynar #2801 | EMITFSI | High Specific Surface Area | Acetylene Black | 1.5/0.3/0.8/0.2 | Silver Paste |
| 4 | E-2 | P1 | EMITFSI | 1.6 | F-8 | ----- | ----- | ----- | ----- | ----- | Silver Paste |
| 5 | E-4 | Nation | EMITf | 0.2 | F-2 | Kynar #2801 | EMITFSI | Activated Carbon | Acetylene Black | 1.5/0.3/0.8/0 | ----- |
| 6 | E-5 | Nafion | EMITf | 0.4 | F-2 | Kynar #2801 | EMITFSI | Activated Carbon | Acetylene Black | 1.5/0.3/0.8/0 | ----- |
| 7 | E-6 | Nafion | EMITf | 0.6 | F-2 | Kynar #2801 | EMITFSI | Activated Carbon | Acetylene Black | 1.5/0.3/0.8/0 | ----- |

« Measurement Examples 1 to 12 »

Electrical Determination of Electrode and Nonaqueous Polymer Solid Electrolyte of Examples

Determination of surface resistance and electric capacitance of the deformation sensors using electrodes of (F-1) to (F-4) were carried out. Further, ion conductivity of the nonaqueous polymer solid electrolytes (E-1) to (E-3) was determined. Furthermore, S/N ratios of the deformation sensors comprising a nonaqueous polymer solid electrolyte and a counter electrode produced in Examples 1 to 12 were determined. Correlation coefficient between the deformation angle and voltage signal value were calculated. The obtained results are shown in Table 3.

« Comparative Measurement Examples 1 to 7 »

Electrical determination of Electrode and Nonaqueous Polymer Solid Electrolyte of Comparative Examples Determination of surface resistance and electric capacitance of the deformation sensors comprising electrodes of (F-5) to (F-8) were carried out. Ion conductivity of the nonaqueous polymer solid electrolytes (E-4) to (E-6) was determined. Further, S/N ratios of the deformation sensors comprising nonaqueous polymer solid electrolyte and a pair of electrodes produced in Comparative Examples 1 to 7 were measured. Correlation coefficient between the deformation angles and voltage signal values was calculated. The results obtained are shown in Table 3.

Table 3

| | Surface Resistance (Ω/square) | Capacitance ($mF/cm^2$) | Ionic Conductance (S/cm) | Flexible element Characteristic | |
|---|---|---|---|---|---|
| | | | | S/N Ratio | Correlation Coefficient |
| Ex. 1 | $8.2x10^{-1}$ | 106 | $4.5 \times 10^{-4}$ | 17 | 0.991 |
| Ex. 2 | $5.8x10^{-1}$ | 106 | $4.5 \times 10^{-4}$ | 20 | 0.995 |
| Ex. 3 | $8.2x10^{-1}$ | 340 | $4.5 \times 10^{-4}$ | 15 | 0.999 |
| Ex. 4 | $5.8 \times 10^{-1}$ | 340 | $4.5 \times 10^{-4}$ | 16 | 0.998 |
| Ex. 5 | $8.2 \times 10^{-1}$ | 106 | $1.4 \times 10^{-3}$ | 18 | 0.992 |
| Ex. 6 | $5.8 \times 10^{-1}$ | 106 | $1.4 \times 10^{-3}$ | 22 | 0.996 |
| Ex. 7 | $8.2 \times 10^{-1}$ | 340 | $1.4 \times 10^{-3}$ | 14 | 0.991 |
| Ex. 8 | $5.8 \times 10^{-1}$ | 340 | $1.4 \times 10^{-3}$ | 16 | 0.998 |
| Ex. 9 | $8.2 \times 10^{-1}$ | 105 | $8.5 \times 10^{-3}$ | 13 | 0.999 |
| Ex. 10 | $5.8 \times 10^{-1}$ | 105 | $8.5 \times 10^{-3}$ | 13 | 0.992 |
| Ex. 11 | $8.2 \times 10^{-1}$ | 340 | $8.5 \times 10^{-3}$ | 11 | 0.993 |
| Ex. 12 | $5.8 \times 10^{-1}$ | 340 | $8.5 \times 10^{-3}$ | 13 | 0.995 |
| Comp. Ex. 1 | $1.1 \times 10^2$ | 106 | $1.4 \times 10^{-3}$ | 0.8 | 0.992 |
| Comp. Ex. 2 | $3.2 \times 10^2$ | 340 | $1.4 \times 10^{-3}$ | 2.1 | 0.991 |
| Comp. Ex. 3 | $8.2 \times 10^{-1}$ | 540 | $1.4 \times 10^{-3}$ | 8.2 | 0.997 |
| Comp. Ex. 4 | $8.2 \times 10^{-1}$ | 0.01 | $1.4 \times 10^{-3}$ | 0.5 | 0.992 |
| Comp. Ex. 5 | $8.2 \times 10^{-1}$ | 393 | $1.5 \times 10^{-3}$ | 8.9 | 0.995 |
| Comp. Ex. 6 | $8.2 \times 10^{-1}$ | 404 | $4.2 \times 10^{-3}$ | 8.3 | 0.992 |
| Comp. Ex. 7 | $8.2 \times 10^{-1}$ | 424 | $1.1 \times 10^{-2}$ | 7.5 | 0.994 |

Surface resistance of the electrodes, electric capacitance per $1cm^2$ of the flexible elements and ion conductivity of the nonaqueous polymer solid electrolytes of Examples 1 to 12 were all in the range of not more than 10Ω/square, 0.1 to 500mF, and not less than $1 \times 10^{-7}$ S/cm and not more than $1 \times 10^{-1}$ S/cm, respectively.

Generally, it is known that deformation sensor shows an excellent response sensitivity when the S/N ratio is not less than 10. Examples 1 to 12 also had the S/N ratios of not less than 10, showing excellent response sensitivity. Furthermore, correlation coefficients between the amount of deformation and the generated voltage of Examples 1 to

12 were not less than 0.990, showing an excellent correlationship.

On the contrary, in Comparative Examples 1 and 2, the surface resistance of the composite electrode exceeded 10Ω/square, but the S/N ratio at this time was a low value of not more than 10, showing low response sensitivity. In Comparative Example 3, the flexible element had an electric capacitance of more than 500mF per 1 $cm^2$, and in Comparative Example 4, the flexible element had an electric capacitance of less than 0.1mF. The S/N ratios of Comparative Examples were not more than 10, showing low response sensitivity.

Comparative Examples 5 to 7 were comprised of a polymer containing an ionic dissociative group as a nonaqueous polymer solid electrolyte. In these cases, the ionic conductivity was in the range of not less than 1 x $10^{-7}$S/cm and not more than 1 x $10^{-1}$S/cm, but S/N ratios were not more than 10, showing poor response sensitivity.

From these results, the deformation sensors of Examples showed high sensitivity in response to deformation and can be effectively utilized as deformation sensors.

« Examples 13 to 33 »

Deformation Sensors having Electrode Patterns

Composition ratios of electrodes having a nonaqueous polymer solid electrolyte and an electrode pattern produced according to Reference Examples are shown in Table 4. In Figs. 2 to 4, the width of the stripe of the conductive portion was 10mm, a distance between stripes (width of the nonconductive portion) is set to 5mm. In Figs. 5 to 7, a length of a side of the conductive polygonal shape was set to 10mm and the minimum distance between each electrode pattern was set to 1 mm. Further, in Fig. 8, the conductive portion was a circular shape having a radius of 5mm and the minimum distance between the circles was set to 5mm.

« Measurement Examples 13 to 33 »

Evaluation of Sensing Characteristics of Examples of Deformation Sensors

In the deformation sensors comprising nonaqueous polymer solid electrolyte and electrode pattern produced in Examples 13 to 33, voltage values were measured when displacement of 500μm was given to arbitrary electrode pattern surface that is connected to a data logger to determine the noise to signal voltage ratio of S/N (m, n). Further, voltage value when deformation of 500μm was given to a conductive portion next to the conductive portion of the electrode pattern that was connected to the data logger was measured to determine the noise to signal voltage ratio of S/N (m+1, n). These results are shown in Table 4.

« Comparative Examples 8 to 10 »

Flexible Elements having no Electrode Pattern

Compositional ratio of nonaqueous polymer solid electrolyte and electrode produced according to Reference Examples are shown in Table 5.

In Comparative Examples 8 and 9, silver paste ('Varniphite M-15A' produced by Nippon Graphite Industories, Ltd.), an electrically-conductive coating, was applied on the whole area of the electrode. In Comparative Example 10, the silver paste ('Varniphite M-15A' produced by Nippon Graphite Industories,Ltd.) was not applied to the electrode.

« Comparative Measurements 8 to 10 »

Evaluation of Sensing Characteristics of the Flexible Elements of Comparative Examples

In the deformation sensors comprising nonaqueous polymer solid electrolyte and an electrode pattern produced in Comparative Examples 8 to 10, a voltage value generated when displacement of 500μm was given to an arbitrary position that is connected to a data logger was measured to determine a noise to signal voltage ratios S/N (m, n). A voltage value when displacement of 500μm was given to a position 1mm away from the position that was connected to the data logger was measured to determine a noise to signal voltage ratio S/N (m+1,n). These results are shown in Table 5.

Table 4

| Ex./ Comp.Ex. | Electrolyte | Electrode | Pattern | S/N (m, n) | S/N (m+1, n) |
|---|---|---|---|---|---|
| Ex. 13 | E-1 | F-1 | Fig. 2 | 13 | 0 |
| Ex. 14 | E-1 | F-1 | Fig. 3 | 13 | 0 |
| Ex. 15 | E-1 | F-1 | Fig. 4 | 16 | 0 |
| Ex. 16 | E-1 | F-1 | Fig. 5 | 15 | 0 |
| Ex. 17 | E-1 | F-1 | Fig. 6 | 12 | 0 |
| Ex. 18 | E-1 | F-1 | Fig. 7 | 14 | 0 |
| Ex. 19 | E-1 | F-1 | Fig. 8 | 15 | 0 |
| Ex. 20 | E-2 | F-1 | Fig. 2 | 13 | 0 |
| Ex. 21 | E-2 | F-1 | Fig. 3 | 13 | 0 |
| Ex. 22 | E-2 | F-1 | Fig. 4 | 16 | 0 |
| Ex. 23 | E-2 | F-1 | Fig. 5 | 15 | 0 |
| Ex. 24 | E-2 | F-1 | Fig. 6 | 12 | 0 |
| Ex. 25 | E-2 | F-1 | Fig. 7 | 14 | 0 |
| Ex. 26 | E-2 | F-1 | Fig. 8 | 15 | 0 |
| Ex. 27 | E-2 | F-2 | Fig. 2 | 13 | 0 |
| Ex. 28 | E-2 | F-2 | Fig. 3 | 13 | 0 |
| Ex. 29 | E-2 | F-2 | Fig. 4 | 16 | 0 |
| Ex. 30 | E-2 | F-2 | Fig. 5 | 15 | 0 |
| Ex. 31 | E-2 | F-2 | Fig. 6 | 12 | 0 |
| Ex. 32 | E-2 | F-2 | Fig. 7 | 14 | 0 |
| Ex. 33 | E-2 | F-2 | Fig. 8 | 15 | 0 |

Table 5

| Ex./ Comp.Ex. | Electrolyte | Electrode | Pattern | S/N (m, n) | S/N (m+1, n) |
|---|---|---|---|---|---|
| Comp. Ex.8 | E-1 | F-1 | Whole Area | 15 | 12 |
| Comp. Ex.9 | E-1 | F-2 | Whole Area | 14 | 10 |
| Comp. Ex.10 | E-1 | F-5 | none | 18 | 12 |

Examples 13 to 33 represent deformation sensors comprising an electrode pattern represented by Figs. 2 to 8 provided on the electrode.

Generally, when a sensor has an S/N ratio of not less than 10, the sensor has excellent response sensitivity as a deformation sensor. The above mentioned sensors have high response sensitivity of S/N ratio of not less than 10 when displacement is given to a position that is connected the logger. On the other hand, a position next to the position that is connected to the data logger did not generate any voltage.

Comparative Examples 8 and 9 relate to a flexible element having a conductive part with no pattern on the electrode. Comparative Example 3 relates to a flexible sheet element having no conductive part on the electrode. These elements have high response sensitivity of not less than 10 S/N ratio when displacement is given to a position to which a data logger was connected, but when another displacement was given to a position 5mm away from the previous position, an equal voltage was generated. That is, the two positions could not be distinguished.

From these results, the conductive portion of the electrode pattern of the deformation sensor shows the high

sensitivity in response to the displacement, and the nonconductive portion does not generate a voltage in response to the displacement. Accordingly, the deformation sensor can be effectively utilized as a sensing element capable of detecting a position of deformation and a pressure distribution.

Industrial Applicability

The deformation sensor of the present invention generates voltages when displacement is given and has a satisfactory and practically responsiveness in the air atmosphere, so that it can be utilized as a flexible deformation sensor satisfactorily.

## Claims

**1.** A deformation sensor comprising a flexible element that generates electromotive force through deformation thereof comprising:

at least a pair of electrodes and
a nonaqueous polymer solid electrolyte comprising;
an ionic liquid and
a polymer component containing no ionic dissociative group, which is selected from at least either of a polymer containing a monomer unit having a hetero atom and a block copolymer containing a block of the polymer,
wherein a surface electric resistance of at least a part of an electrode surface which does not abut on the nonaqueous polymer solid electrolyte is not more than 10Ω/square, and an electric capacitance of the flexible element is in the range of 0.1 to 500mF per 1 $cm^2$.

**2.** The deformation sensor according to Claim 1, wherein the ionic conductance of the nonaqueous polymer solid electrolyte is in the range of not less than 1 x $10^{-7}$S/cm and not more than 1 x $10^{-1}$S/cm.

**3.** The deformation sensor according to Claim 1, wherein the electrode contains carbon fine particles as a constituent thereof.

**4.** The deformation sensor according to Claim 1, wherein the polymer component contains a copolymer, as a component, which contains a polymer block miscible with the ionic liquid and another polymer block immiscible with the ionic liquid, the copolymer being in a condition impregnated with the ionic liquid.

**5.** The deformation sensor according to Claim 1, wherein on one electrode surface, on which a nonaqueous polymer solid electrolyte does not abut, a power collecting layer that is connected to an external circuit is attached.

**6.** The deformation sensor according to Claim 5, wherein the power collecting layer has a pattern shape.

**7.** The deformation sensor according to Claim 1, wherein on one surface of each electrode of the pair of electrodes, on which the nonaqueous polymer solid electrolyte does not abut, a power collecting layer that is connected to an external circuit and has a same pattern is attached.

**8.** The deformation sensor which is **characterized in that** the power collecting layers having the same pattern according to Claim 7 are located at positions so as to be arranged to overlap each other via both the nonaqueous polymer solid electrolyte and the pair of electrodes that sandwich the nonaqueous polymer solid electrolyte, the same pattern being a polygonal, round, or/and oval shape and being aligned side by side at regular intervals.

**9.** A deformation sensor capable of detecting a position of deformation and a pressure distribution by generating an electromotive force through deformation of a flexible element, the flexible element comprising:

a nonaqueous polymer solid electrolyte that comprises an ionic liquid and a polymer component selected at least either of a polymer containing a monomer unit having a hetero atom and a block copolymer containing a block of the polymer, and
at least a pair of electrodes sandwiching the nonaqueous polymer solid electrolyte.

**10.** The deformation sensor capable of detecting position of deformation and pressure distribution according to Claim

9, wherein the electrode has a pattern shape.

**11.** The deformation sensor capable of detecting position of deformation and pressure distribution according to Claim 9, wherein each electrode of the pair of electrodes has a plurality of electric conductive patterns independently connecting to an external circuit without electrically conducting with each other, and an opposing point of a pair of electric conductive patterns sandwiching the nonaqueous polymer solid electrolyte is a detecting position.

**12.** The deformation sensor capable of detecting position of deformation and pressure distribution according to Claim 9, wherein both electrodes of the pair of electrodes have a same pattern.

**13.** The deformation sensor having the patterns according to Claim 12 which are located at positions so as to be arranged to overlap each other via the nonaqueous polymer solid electrolyte, the same pattern having a polygonal, round or/and oval shape and being aligned side by side at equal intervals.

**14.** The deformation sensor capable of detecting position of deformation and pressure distribution according to Claim 9, wherein on one surface of each electrode of the pair of electrodes, on which the nonaqueous polymer solid electrolyte does not abut, a power collecting layer having a plurality of patterns independently connecting to an external circuit without electrically conducting with each other is provided, and an opposing point of a pair of a pattern of the power collecting layer is a detecting position.

Fig. 1

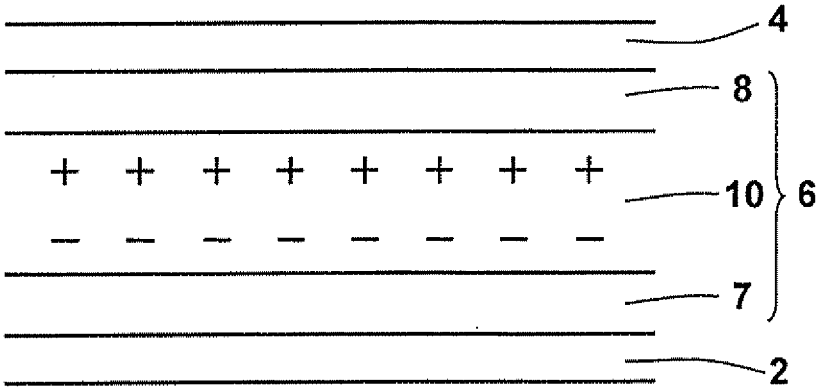


Fig. 2

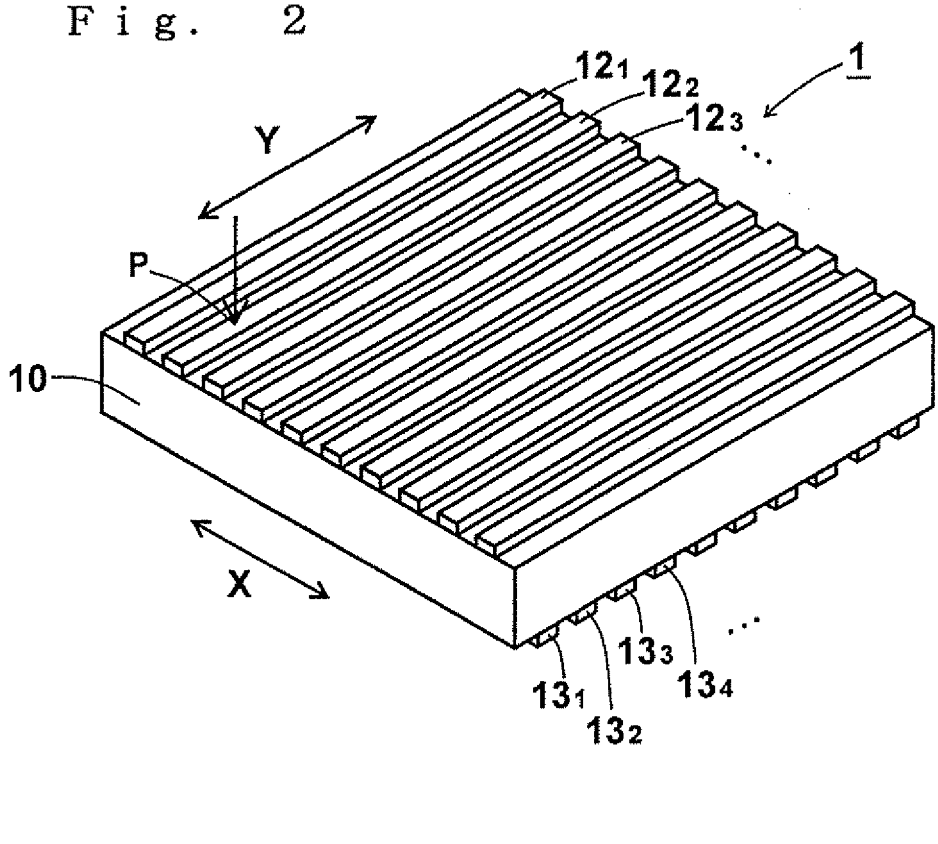

Fig. 3

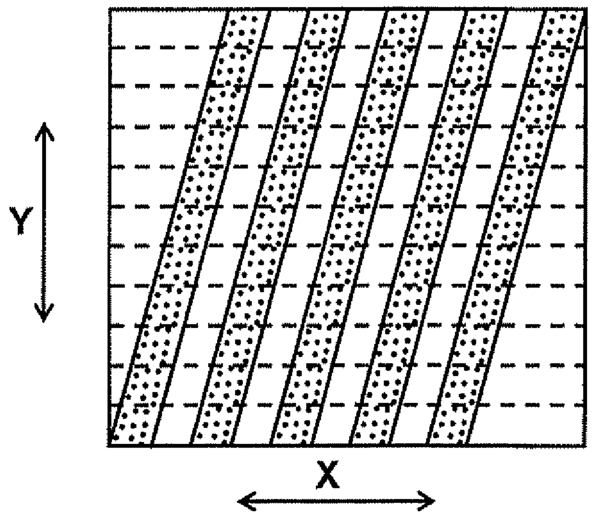


Fig. 4

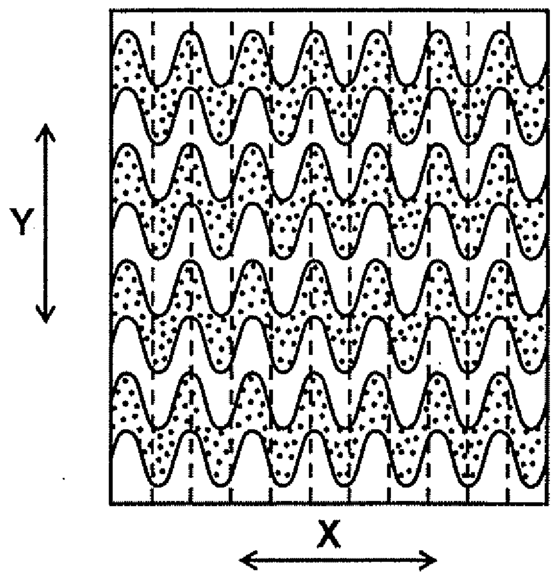

Fig. 5

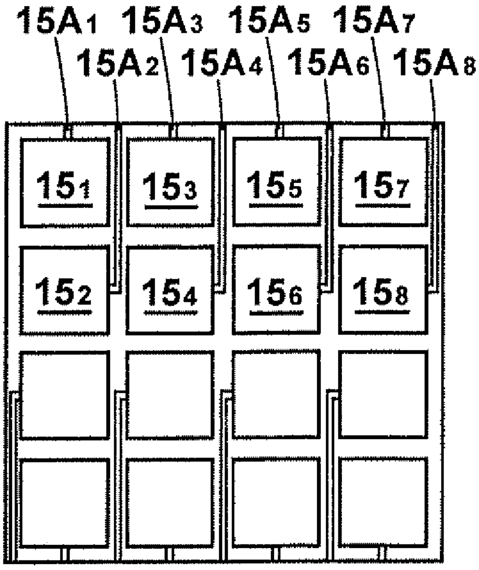
15A1
15A2
15A3
15A4
15A5
15A6
15A7
15A8
151
152
153
154
155
156
157
158

Fig. 6

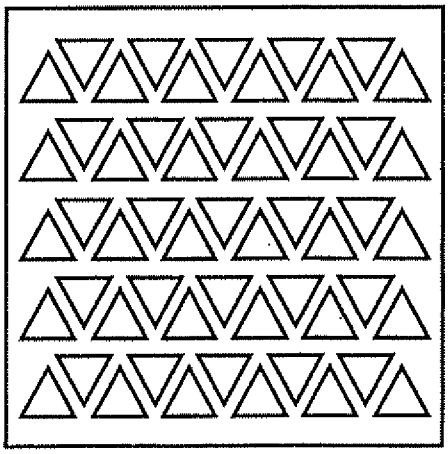

Fig. 7

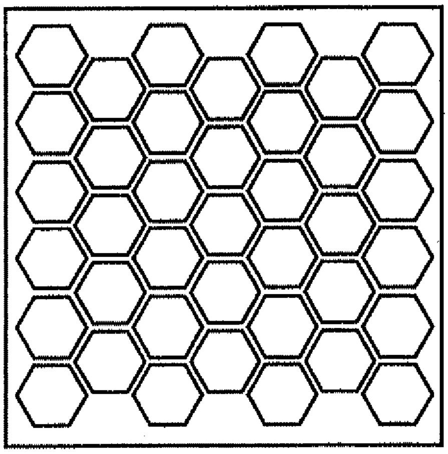

Fig. 8

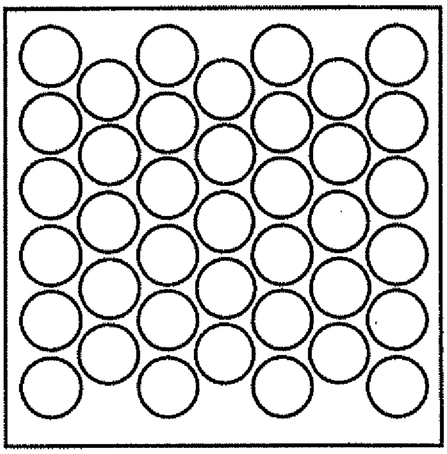

Fig. 9

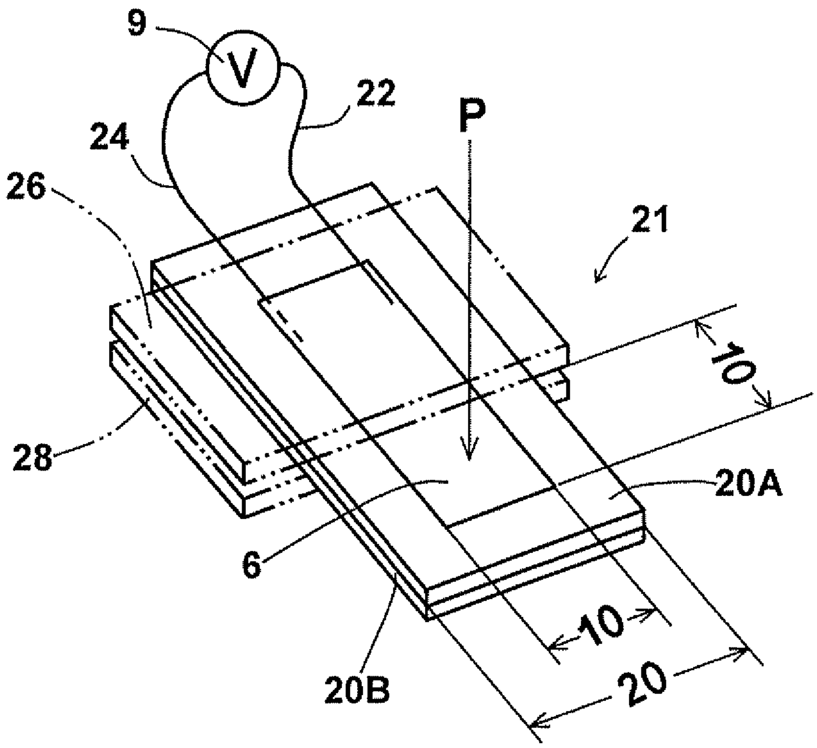

## INTERNATIONAL SEARCH REPORT

International application No.
PCT/JP2009/051338

A. CLASSIFICATION OF SUBJECT MATTER
*G01B7/16*(2006.01)i, *G01D21/00*(2006.01)i, *G01L5/00*(2006.01)i

According to International Patent Classification (IPC) or to both national classification and IPC

B. FIELDS SEARCHED

Minimum documentation searched (classification system followed by classification symbols)
G01B7/00-7/34, G01D21/00-21/02, G01L5/00-5/28, H01L41/00-41/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-125570 A (Toyota Central Research and Development Laboratories, Inc.), 11 May, 1999 (11.05.99), Full text; all drawings (Family: none) | 1-14 |
| A | JP 11-132879 A (Kanto Bussan Kabushiki Kaisha), 21 May, 1999 (21.05.99), Full text; all drawings (Family: none) | 1-14 |
| A | JP 2002-4130 A (Nissan Motor Co., Ltd.), 09 January, 2002 (09.01.02), Full text; all drawings & US 2001/0050196 A1 | 1-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 March, 2009 (18.03.09) | 31 March, 2009 (31.03.09) |
| Name and mailing address of the ISA/ Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1038736 A1
- JP 2007010482 A
- JP 63309252 A
- JP 2006173219 A
- JP 2004289994 A
- JP 2005051949 A


### Non-patent literature cited in the description


- *Proc. of SPIE,* vol. 6529, L-1
- *Science,* 2003, vol. 302, 792
- Ultrafine Particle Handbook. Fujitech Corporation, 1990, 138-141